(19) Europäisches Patentamt
European Patent Office
Office européen des brevets

(11) **EP 2 063 183 B1**

(12) **EUROPÄISCHE PATENTSCHRIFT**

(45) Veröffentlichungstag und Bekanntmachung des Hinweises auf die Patenterteilung:
**19.06.2013 Patentblatt 2013/25**

(51) Int Cl.:
***F24C 7/08*** *(2006.01)*

(21) Anmeldenummer: 08169387.1

(22) Anmeldetag: **19.11.2008**

(54) **Verfahren zur Bestimmung der Kerntemperatur eines Garguts**

Method for determining core temperature of cooked food

Procédé de détermination de la température de noyau d'un article de cuisson

(84) Benannte Vertragsstaaten:
**CZ DE DK FR IT**

(30) Priorität: **26.11.2007 DE 102007057107**

(43) Veröffentlichungstag der Anmeldung:
**27.05.2009 Patentblatt 2009/22**

(73) Patentinhaber: **Rational AG**
**86899 Landsberg a. Lech (DE)**

(72) Erfinder: **Schreiner, Thomas**
**86916 Kaufering (DE)**

(74) Vertreter: **Weber-Bruls, Dorothée et al**
**Jones Day**
**Nextower**
**Thurn-und-Taxis-Platz 6**
**60313 Frankfurt am Main (DE)**

(56) Entgegenhaltungen:
**EP-A- 1 921 384     EP-A- 2 026 632**
**WO-A-02/47522     DE-A1- 19 609 116**
**DE-A1- 19 718 399     US-B1- 6 753 027**

EP 2 063 183 B1

**Beschreibung**

Die vorliegende Erfindung betrifft ein Verfahren zur Bestimmung der Kerntemperatur eines Garguts während eines Garprozesses in einem Gargerät, das mindestens einen Temperatursensor, eine Recheneinheit und einen Speicher umfasst.

Die Verwendung von Temperatursensoren zur Bestimmung der Temperatur eines Garguts, die wiederum zur Steuerung von Garprozessen verwendet wird, ist gut bekannt. Üblicherweise kommt dabei ein Temperatursensorspieß, der ein oder mehrere Thermoelemente und gegebenenfalls weitere Sensoren beinhaltet, zum Einsatz. Solch ein Temperatursensorspieß wird zu Beginn eines Garprozesses in ein Gargut eingeführt und erfasst während des Garprozesses die Messdaten, die den Zustand des Garguts charakterisieren sollen. Die Übertragung der Messdaten erfolgt meist über ein Kabel zwischen dem Spieß und einer Recheneinheit des Gargeräts. Alternativ können die Daten auch per Sender und Empfänger, wie z. B. in der EP 0 687 866 A1 vorgeschlagen, übertragen werden. Die Erfassung der Daten dient hauptsächlich der Steuerung des Garprozesses aber auch der Dokumentation der ablaufenden Garprozesse hinsichtlich Hygienevorschriften.

Die WO 98/48679 offenbart ein Verfahren zum individuellen Führen eines Garprozesses, sowie ein dazugehörendes Gargerät. Der Garprozeß wird dabei in Abhängigkeit von einem oder mehreren Werten einer Ableitung einer Garzustandsgröße nach der Zeit während des Garprozesses geführt. Dazu werden Messwerte an verschiedenen Stellen im Gargut zur Ermittlung der Kerntemperatur über einen Messfühler in regelmäßigen Zeitabständen aufgenommen und gespeichert. Eine Auswerteeinheit bestimmt aus den aufgenommenen Werten die erste Ableitung der Kerntemperatur nach der Zeit. Die dort durchgeführten Rechenschritte dienen der Extrapolation des zeitlichen Verlaufs der Kerntemperatur. Anhand dieser Berechnungen soll also bestimmt werden, wie der Verlauf der Kerntemperatur über die Zeit in den nachfolgenden Zeitabschnitten sein wird. Dabei wird vorausgesetzt, dass eine der Messstellen im oder am Kern des Garguts platziert ist, also dass die richtige Kerntemperatur, das ist die niedrigste Temperatur im Gargut, mit Hilfe des Kerntemperaturfühlers direkt gemessen wird. Dazu wird eine Mittelung der verschiedenen aufgenommenen Temperaturwerte des Kerntemperaturfühlers durchgeführt, oder es wird die niedrigste Temperatur auf der Fühlernadel als Kerntemperatur definiert.

Aus der EP 0 601 137 B1 ist eine Temperaturmesssonde bekannt, mit der die Temperatur in einem Gargut, das innerhalb eines Gargeräts gegart werden soll, bestimmt wird und die mehrere Temperaturmesspunkte aufweist. Der dort beschriebene Ofen wird anhand des niedrigsten gemessenen Temperaturwerts des Garprozessfühlers geregelt.

Eine Berücksichtigung von Temperaturverläufen bei der Bestimmung der Kerntemperatur ist beispielsweise aus der DE 199 45 021 A1 bekannt.

Aus der DE 100 61 821 A1 ist ein Verfahren zur Bestimmung der Fehlstechung eines Kerntemperaturfühlers bekannt, bei dem aus den Temperaturen der Temperaturmessfühler eines Mehrpunkttemperatursensors, den Differenzen dieser Temperaturen untereinander und der zeitlichen Entwicklung dieser Größen eine Fehlstechung erkannt wird, d.h. eine fehlerhafte Platzierung des Kerntemperaturfühlers im Gargut erkannt wird. Darin wird auch vorgeschlagen, anhand des räumlichen Gradienten der Temperaturverteilung auf der Fühlernadel eine räumliche Extrapolation durchzuführen, um einen genaueren Wert für die tatsächliche Kerntemperatur zu erhalten. Das Verfahren ist jedoch an sich nicht sehr genau und erfordert, dass zumindest drei Temperatursensoren im Gargut platziert sind. Eine Extrapolation kann mit dem beschriebenen Verfahren auch nur entlang der Achse der Fühlernadel erfolgen, so dass die kälteste Stelle im Gargut nicht bestimmt werden kann, wenn der kälteste Punkt nicht auf der Achse der Fühlernadel liegt.

Die DE 196 09 116 A1 beschreibt ein Verfahren zum Garen von Nahrungsmitteln, bei dem die Kerntemperatur mehrmals zu definierten Zeitpunkten abgetastet wird und aus den Abtastwerten ein Endzeitpunkt für den Garprozeß ermittelt wird. Dazu wird eine Lösung der Wärmeleitungsgleichung, und zwar in Form einer Näherungslösung für zylindrisch geformte Gargüter, verwendet, um einen funktionalen Zusammenhang zwischen der Zeit und der Temperatur herzustellen. Anhand der Temperaturwerte zu verschiedenen Zeitpunkten kann so auf den Verlauf der Temperaturkurve, also den Temperaturanstieg im Gargut, zurückgeschlossen werden. Da es sich bei der dort beschriebenen Lösung um eine Exponentialfunktion handelt, reichen drei Temperaturmesswerte zu unterschiedlichen Zeitpunkten aus, um den Verlauf der Temperaturkurve prinzipiell abschätzen zu können. Mit Hilfe von fünf verschiedenen Temperaturwerten des Kerntemperaturfühlers sollen zu Beginn des Garprozesses fünf Variablen der Funktion, nämlich der Wärmeübergangskoeffizient, der Wärmeleitfähigkeitskoeffizient, die Dichte, die spezifische Wärmekapazität und der mittlere Radius des Garguts bestimmt werden. Diese Messungen werden im Lauf des Garprozesses mehrfach wiederholt, um auch eine Änderung der Parameter während des Garprozesses berücksichtigen zu können. Mit Hilfe der so bestimmten Exponentialfunktion wird dann der Endzeitpunkt des Garprozesses vorausberechnet.

Aus der Dissertation von Thomas Roßner zum Thema "Automatisierung des Garprozesses von Fleisch", TU Dresden, 1987, Seiten 55 bis 60, ist ein Verfahren zur Berechnung eines Zeitpunkts bekannt, zu dem eine End-Kerntemperatur erreicht sein wird. Der theoretische zeitliche Temperaturverlauf wird dabei gemäß den Seiten 55 bis 59 mit Hilfe einer Lösung der Fourierschen Differentialgleichung der Wärmeübertragung berechnet. Die experimentelle Bestimmung der Kerntemperatur erfolgt gemäß den Seiten 59 bis 60 anhand einer Temperaturmessung, wobei eine Messsonde mit 10 Ni/CrNi-Thermoelementen eingesetzt wird und die niedrigste Temperatur als Kerntemperatur definiert wird.

Nachteilig an dem hier aufgeführten Stand der Technik ist, dass bei einer fehlerhaften Bestimmung der Kerntemperatur, die aus einer fehlerhaften Platzierung des Temperatursensorspießes im Gargut resultieren kann, eine falsche Kerntemperatur bestimmt wird und somit alle Berechnungen und Steuerungen, die auf den fehlerhaften Werten beruhen, zu Fehlern bei der Garprozeßsteuerung führen. Ebenso kann es zu einer unzutreffenden Dokumentation des Kerntemperaturverlaufs für den Hygienestandard kommen. Dies wird immer dann der Fall sein, wenn keiner der Temperatursensoren des Temperatursensorspießes den Kern des Garguts trifft.

Aufgabe der vorliegenden Erfindung ist es daher, das gattungsgemäße Verfahren zur Bestimmung der Kerntemperatur eines Garguts derart weiterzuentwickeln, dass die Nachteile des Stands der Technik überwunden werden. Insbesondere soll eine genauere Abschätzung der tatsächlichen Kerntemperatur auch bei schlecht platziertem Kerntemperaturmessfühler im Vergleich zum Stand der Technik und ohne genaue Kenntnis über die Randbedingungen der Wärmeleitungsgleichung ermöglicht werden.

Die Aufgabe wird erfindungsgemäß durch das Verfahren mit den Mermalen des Anspruchs 1 gelöst.

Dabei kann vorgesehen sein, dass die Lösung der Differentialgleichung aus einer Vielzahl von zuvor bestimmten Lösungen der Differentialgleichung für unterschiedliche Formen des Garguts, Temperaturen der Oberfläche des Garguts, Größen des Garguts, Gewichte des Garguts, Typen des Garguts, Arten des Garguts, Wärmekapazitäten des Garguts, thermische Diffusivitäten im Gargut, Wärmeleitfähigkeiten des Garguts, spezifische Wärmewerten des Garguts, Wärmeüberträgen vom Garmedium auf das Gargut, Dichten des Garguts, Positionen des Garguts im Garraum, Anzahl an Gargutstücken im Garraum, Vorbehandlungen des Garguts und/oder Oberflächenstrukturen des Garguts ausgewählt wird, wobei vorzugsweise die Form des Garguts und die thermische Diffusivität des Garguts oder die Form des Garguts und die Wärmeleitfähigkeit des Garguts zur Begrenzung der Anzahl der auswählbaren, zuvor bestimmten Lösungen der Differentialgleichung, zumindest näherungsweise, vorgegeben, bestimmt und/oder festgelegt werden, und/oder die Temperatur der Oberfläche des Garguts der Siedetemperatur von Wasser, insbesondere 100 °C, gleichgesetzt wird, und/oder von einem homogenen Gargut ausgegangen wird.

Auch wird mit der Erfindung vorgeschlagen, dass bei der Auswahl der Lösung der Differentialgleichung ein mathematischer Fit des zeitlichen Temperaturverlaufs im Inneren des Garguts berücksichtigt wird, und/oder eine instationäre Differentialgleichung in der Art einer Wärmeleitungsgleichung zu Grunde gelegt wird, und/oder die Lösung der Differentialgleichung während des Garprozesses verbessert wird durch Auswertung von Messdaten zumindest eines weiteren Sensors.

Die instationäre Differentialgleichung ist wie folgt näherungsweise lösbar:

a) bei plattenförmigen Gargütern, wie Schnitzeln, Steaks, Blechkuchen oder dergleichen,

$$\theta(\xi, Bi, Fo) = \sum_{k=1}^{\infty} \frac{2 \cdot \sin(q_k)}{q_k + \sin(q_k) \cdot \cos(q_k)} \cdot \cos(-q_k^2 Fo) \cdot \exp(-q_k^2 Fo)$$

(Gleichung 4), wobei $\xi = \dfrac{x}{L}$ eine dimensionslose Ortskoordinate ist, die von dem Ort in der Platte $x$ in Richtung senkrecht zu den Flächen der Platte und der halben Dicke der Platte $L$ abhängt; $Bi = \dfrac{\alpha \cdot L}{\lambda}$ die Biot-Zahl, mit $\gamma$ als der Wärmeleitfähigkeit und $\alpha$ als dem Wärmeübergangswiderstand der Oberfläche; $Fo = \dfrac{a \cdot t}{L^2}$ die Fourier-Zahl, mit der thermischen Diffusivität der Oberfläche $a$ und der Zeit $t$ und den Eigenwerten $q_k$, die, wenn $Bi$ gegen Unendlich geht, durch $q_k = (k - \frac{1}{2}) \cdot \pi$ gegeben sind, oder

b) bei zylindrischen Gargütern, wie Würsten, Schweinelenden, Auberginen oder dergleichen,

$$\theta(\xi, Bi, Fo) = \sum_{k=1}^{\infty} \frac{2 J_1(q_k)}{q_k \cdot \left[ J_0^2(q_k) + J_1^2(q_k) \right]} \cdot J_0(q_k \xi) \cdot \exp\left(-q_k^2 Fo\right)$$

(Gleichung 5), wobei $\xi = \dfrac{x}{R_Z}$ eine dimensionslose Ortskoordinate ist, die vom Abstand vom Mittelpunkt des Zylinders $x$ und dem Radius des Zylinders $R_Z$ abhängt; mit den Besselfunktionen $J_i$, oder

c) bei kugelförmigen Gargütern, wie Großbraten, Kochschinken, Kartoffelknödel oder dergleichen,

$$\theta(\xi, Bi, Fo) = 2 \cdot \sum_{k=1}^{\infty} \frac{\sin(q_k) - q_k \cos(q_k)}{q_k - \sin(q_k) \cdot \cos(q_k)} \cdot \frac{\sin(q_k \xi)}{q_k \xi} \cdot \exp\left(-q_k^2 Fo\right)$$

(Gleichung 6), oder unter der Annahme, dass Bi gegen Unendlich geht,

$$\theta(\xi, Bi, Fo) = 2 \cdot \sum_{k=1}^{\infty} (-1)^{k+1} \cdot \frac{\sin(-q_k \xi)}{q_k \xi} \cdot \exp\left(-q_k^2 Fo\right)$$

(Gleichung 7), wobei $\xi = \dfrac{x}{R}$ eine dimensionslose Ortskoordinate ist, die vom Abstand vom Mittelpunkt der Kugel $x$ und dem Radius der Kugel $R_Z$ abhängt; den Eigenwerten $q_k$, die durch $q_k = k \cdot \pi$ gegeben sind; mit der Fourier-Zahl und der Biot-Zahl, die für die Kugel durch $Fo = \dfrac{a \cdot t}{R^2}$; $Bi = \dfrac{\alpha \cdot R}{\lambda}$ gegeben sind.

Dabei kann vorgesehen sein, dass eine effektive Dicke eines Garguts bei einer Platten-Form, ein effektiver Radius eines Garguts bei einer Zylinder-Form oder ein effektiver Radius eines Garguts bei einer Kugelform jeweils über das Verhältnis aus Volumen und Oberfläche des Garguts bestimmt wird.

Dabei kann bzw. können über den weiteren Sensor, insbesondere in Form eines optischen Sensorsystems, die Form, Größe, Position und/oder Farbe des Garguts, insbesondere in Form eines Gassensorsystems der chemische Zustand des Garguts über die Gasatmosphäre des Garraums, insbesondere in Form eines Temperatursensors die Oberflächentemperatur des Garguts oder die Garraumtemperatur, insbesondere in Form eines Feuchtesensors die Feuchte in der Garraumatmosphäre, insbesondere in Form eines Impedanzsensors der elektrische Zustand des Garguts, insbesondere in Form eines Sensors zur Bestimmung der Lüfterdrehzahl und/oder der Luftgeschwindigkeit im Garraum, und/oder insbesondere in Form eines Ultraschallsensors die Form, Größe und/oder Position des Garguts bestimmt werden.

Es ist zudem möglich, dass die ausgewählte Lösung der Differentialgleichung auch zur Berechnung zumindest einer die Wärmediffusion im Gargut beeinflussenden Größe, umfassend die Temperatur der Oberfläche des Garguts, die Form des Garguts, die Größe des Garguts, das Gewicht des Garguts, den Typ des Garguts, die Art des Garguts, die Wärmekapazität des Garguts, die thermischen Diffusivität im Gargut, die Wärmeleitfähigkeit des Garguts, die spezifischen Wärme des Garguts, die Temperatur vom Garmedium im Gargerät, den Wärmeübertrag vom Garmedium auf das Gargut, die Dichte des Garguts, die Position des Garguts im Garraum, die Anzahl an Gargutstücken im Garraum, die Vorbehandlung des Garguts und die Oberflächenstruktur des Garguts, verwendet wird.

Auch kann erfindungsgemäß vorgesehen sein, dass eine Vorgabe zumindest einer ersten Gruppe von zuvor bestimmten Lösungen der Differentialgleichung durch direkte oder indirekte Auswahl über ein Bedienmenu auf einer Bedienoberfläche am Gargerät, einer Fernbedienung des Gargeräts und/oder einem mit dem Gargerät verbundenen Computer erfolgt und/oder eine Vorgabe zumindest einer zweiten Gruppe von zuvor bestimmten Lösungen der Differentialgleichung durch Einlesen eines Codes, wie in Form eines Strichcodes, oder über Funk, insbesondere über einen RFID-Chip, erfolgt, und/oder eine Vorgabe zumindest einer dritten Gruppe von zuvor bestimmten Lösungen der Differentialgleichung durch ein Programm erfolgt.

Dabei wird vorgeschlagen, dass das Programm angezeigt, verändert und/oder gespeichert wird, wobei vorzugsweise während eines Garprozesses das Programm in Abhängigkeit von Messdaten des Temperatursensors und/oder des weiteren Sensors geändert wird.

Erfindungsgemäß kann vorgesehen sein, dass die bestimmte Kerntemperatur und/oder die bestimmte, die Wärmediffusion beeinflussende Größe zur Steuerung oder Regelung des Garprozesses verwendet und/oder auf einer Anzeigeeinrichtung, insbesondere des Gargeräts, angezeigt und/oder, vorzugsweise im Speicher, gespeichert wird bzw. werden.

Auch kann der Beginn des Anstiegs der Temperatur, die Geschwindigkeit des Anstiegs der Temperatur und/oder die Beschleunigung des Anstiegs der Temperatur aus den Messdaten des Temperatursensors ausgewertet werden.

Weiterhin wird erfindungsgemäß vorgeschlagen, dass zumindest zwei Temperatursensoren im Inneren des Garguts platziert werden, ein Vergleich der aus den Messdaten der Temperatursensoren berechneten Kerntemperaturen durchgeführt wird, und in Abhängigkeit von dem Ergebnis des Vergleichs die Güte der Kerntemperaturbestimmung, Informationen zu dem Gargut und/oder eine vierte Gruppe von zuvor bestimmten Lösungen der Differentialgleichung ermittelt wird bzw. werden, wobei vorzugsweise die Güte der Kerntemperaturbestimmung, die Information zu dem Gargut und/oder die vierte Gruppe der zuvor bestimmten Lösungen der Differentialgleichung, angezeigt und/oder gespeichert wird bzw. werden, und/oder die Auswahl der Lösung der Differentialgleichung und/oder die Berechnung der Kerntemperatur, der die Wärmediffusion beeinflussenden Größe, die Güte der Kerntemperatur und/oder der Information zu dem Gargut sooft wiederholt wird, bis die Lösung bzw. der berechnete Werte auf einen Endwert konvergiert.

Dabei kann nach der Erfindung vorgesehen sein, dass die zumindest zwei Temperatursensoren im Gargut einen bekannten Abstand voneinander haben, und aus dem Abstand der Temperatursensoren die Wärmediffusion im Gargut bei bekannter Größe und Form des Garguts, die Position der Temperatursensoren im Gargut und/oder die Größe des Garguts bei bekannter Form des Garguts und Wärmediffusion im Gargut bestimmt wird bzw. werden.

Auch kann vorgesehen sein, dass zumindest drei Temperatursensoren auf einer Geraden innerhalb des Garguts platziert werden können, wobei die Messdaten der Temperatursensoren zur Bestimmung eines Temperaturgradienten im Inneren des Garguts, des zeitlichen Verlaufs des Temperaturgradienten, des Zeitpunkts, bei dem sich ein definierter Temperaturgradient einstellt, und/oder der Kerntemperatur des Garguts berücksichtigt werden.

In einer weiteren Ausführungsform kann vorgesehen sein, dass die Messdaten jedes Temperatursensors, die Messdaten des weiteren Sensors, die zuvor bestimmten Lösungen der Differentialgleichung, insbesondere die erste, zweite, dritte und/oder vierte Gruppe an zuvor bestimmten Lösungen der Differentialgleichung, und/oder die ausgewählte Lösung der Differentialgleichung gespeichert

Auch wird erfindungsgemäß vorgeschlagen, dass als Parameter der Lösung der Differentialgleichung zur Berechnung der Kerntemperatur und/oder der die Wärmediffusion beeinflussenden Größe normierte, dimensionslose Größen für die Zeit, den Ort im Gargut und/oder den Wärmeübergang von einem Garmedium auf das Gargut verwendet wird bzw. werden, und/oder ein Fit für den dimensionslosen Ort $\xi = \dfrac{x}{R}$ zur Auswertung des Temperaturverlaufs an die Funktionen der zuvor bestimmten Lösungen der Differentialgleichung berechnet und die Lösung ausgewählt wird, bei der die Abweichung des Fits am geringsten ist.

Ferner ist nach der Erfindung bevorzugt, dass als Lösung der Differentialgleichung empirisch bestimmte Temperaturkurven verwendet werden, die in verschiedenen Tiefen unterschiedlicher Gargüter bei vorgegebenen Formen der Gargüter, insbesondere durch Messreihen, vorbestimmt wurden, wobei vorzugsweise die Temperaturkurven als Funktion des Parameters $\dfrac{\xi}{R}$ in einem Speicher des Gargeräts hinterlegt wurden.

Dabei kann des weiteren vorgesehen sein, dass die Temperaturkurve mit der geringsten Abweichung, insbesondere Standardabweichung, zu den gemessenen Temperaturen ermittelt wird oder die zwei Temperaturkurven mit der geringsten Abweichung, insbesondere Standardabweichung, zu den gemessenen Temperaturen ermittelt werden und zwischen diesen zwei Temperaturkurven eine weitere Temperaturkurve extrapoliert wird.

Zudem ist vorgesehen, daß die Kerntemperatur des Garguts mit der ermittelten Temperaturkurve durch Einsetzen von $\dfrac{\xi}{R} = 0$ berechnet wird.

Des weiteren wird die Aufgabe erfindungsgemäß gelöst durch ein Gargerät zur Behandlung eines Garguts in einem Garraum, umfassend wenigstens einen im Garraum platzierbaren ersten Temperatursensor, der zur Bestimmung der Temperatur an wenigstens einer beliebigen Stelle im Inneren des Garguts geeignet ist, eine Recheneinheit, einen Speicher und eine Heizeinrichtung, zum Durchführen eines Verfahrens nach einem der vorangehenden Ansprüche.

Dabei ist bevorzugt zumindest ein zusätzlicher Sensor, insbesondere ausgewählt aus einem Gassensorsystem zur Bestimmung des chemischen Zustands des Garguts über die Gasatmosphäre des Garraums, einem optischen Sensorsystem zur Bestimmung der Form, Größe, Position und/oder Farbe des Garguts, einem zweiten Temperatursensor zur Bestimmung der Oberflächentemperatur des Garguts, einem dritten Temperatursensor zur Bestimmung des Garraumtemperatur, einem Feuchtesensor zur Bestimmung der Feuchte in der Garraumatmosphäre, einem Impedanzsensor zur Bestimmung des elektrischen Zustands des Garguts und/oder einem Ultraschallsensor zur Bestimmung der Form, Größe und/oder Position des Garguts, vorgesehen.

Ferner kann zumindest eine Eingabeeinrichtung, eine Anzeigeeinrichtung und/oder eine Leseeinrichtung, jeweils in Wirkverbindung mit der Recheneinheit vorgesehen sein.

Auch kann vorgesehen sein, dass die Eingabeeinrichtung und die Anzeigeeinrichtung in einem Bedienelement bereitgestellt sind, und/oder die Leseeinrichtung zum Lesen eines Strichcodes und/oder eines RFID-Chips geeignet ist.

In einer alternativen Ausführungsform kann vorgesehen sein, dass zumindest zwei in dem Gargut plazierbare Temperatursensoren vorgesehen sind, wobei die zumindest zwei Temperatursensoren vorzugsweise an oder in einem Temperatursensorspieß jeweils in einem definierten Abstand voneinander angeordnet sind.

Dabei können auch zumindest drei in einem Gargut platzierbare Temperatursensoren vorgesehen sein.

Schließlich kann das Gargerät auch durch eine Kühleinrichtung, eine Einrichtung zum Zuführen von Feuchtigkeit in den Garraum, eine Einrichtung zum Abführen von Feuchtigkeit aus dem Garraum, eine Einrichtung zum Zirkulieren von Garraumatmosphäre, einen Wärmespeicher, eine Garraumtür mit Türkontaktschalter und/oder eine Reinigungseinrichtung gekennzeichnet sein.

Der Erfindung liegt somit die überraschende Erkenntnis zu Grunde, dass eine geeignete Lösung einer Differentialgleichung, die die Wärmediffusionsprozesse im Gargut beschreibt, durch die Analyse der zeitlichen Entwicklung einer Temperatur an einer beliebigen Stelle im Gargut ausgewählt werden kann und mit Hilfe dieser Lösung die Kerntemperatur im Gargut berechnet werden kann. Eine Lösung einer Differentialgleichung, die die Wärmediffusionsprozesse im Gargut beschreibt, kann dabei unter Zugriff auf Formeln und/oder empirisch bestimmte Temperaturkurven, festgelegt sein. Bei den Formeln handelt es sich um Näherungsformeln und bei den Temperaturkurven handelt es sich um Messreihen, vorzugsweise für Gargüter definierter Form und Art, um eine große Auswahl verschiedener Lösungen zur Auswahl zu haben.

Zur Auswahl der besten Lösung der passenden Differentialgleichung muss eine möglichst große Zahl verschiedener unterschiedlicher Lösungen mit unterschiedlichen Randbedingungen für verschiedene Differentialgleichungen vorhanden sein. Die verschiedenen unterschiedlichen Lösungen sollten möglichst alle theoretisch möglichen Varianten darstellen können, die die Wärmeflüsse in verschiedenen Gargüter beschreiben. Eine Vorauswahl, die auf Informationen beruht, die aufgrund von Daten anderer Sensoren oder durch eine Eingabe oder ein Einlesen am Gargerät gewonnen wurden, kann durch den Ausschluss von unpassenden Lösungen der Differentialgleichung getroffen werden. Aus den Verbleibenden Lösungen kann dann diejenige ausgewählt werden, deren Temperaturverlauf am besten zu dem im Gargut gemessenen Temperaturverlauf passt.

Die Kerntemperatur eines Garguts ist der kälteste Punkt in dem Gargut, der sich üblicherweise im Schwerpunkt bzw. im geometrischen Zentrum des Garguts befindet. Wird ein Gargut aus einer Kühleinrichtung entnommen und in den Garraum eines Gargeräts eingebracht, wird Wärme über Konvektion eines Garmediums im Gargerät oder durch Strahlung auf das Gargut übertragen. Das Garmedium kann in einem Kombidämpfer Luft oder Dampf bzw. eine Mischung daraus sein, wobei der Dampf beim Kondensieren am Gargut einen zusätzlichen Beitrag zur Wärmeübertragung liefert. Im Fall eines Garens in einem Topf ist heißes Wasser oder im Fall eines Garraums einer Friteuse ist heißes Fett das Garmedium. Wärme wird dabei stets von Außen in das Gargut eingeleitet und diffundiert anschließend, dem Temperaturgradienten im Inneren des Garguts folgend, in Richtung zum Kern des Garguts. Dies gilt nicht bei Mikrowellengargeräten, bei denen die Wärme im Gargut erzeugt wird. Für große Gargüter stimmt die Betrachtung jedoch in guter Näherung, wenn der Durchmesser des Garguts groß gegen die Eindringtiefe der Mikrowelle in das Gargut ist und die Wärme daher in der Nähe der Oberfläche des Garguts erzeugt wird. In einem solchen Fall kann das erfindungsgemäße Verfahren zur Anwendung kommen, zum Beispiel bei einem Mikrowellengargerät, da die Erwärmung dann zumindest näherungsweise von außen nach innen erfolgt. Sobald die Temperatur im Kern des Garguts zu steigen beginnt, ist die Kerntemperatur immer die niedrigste Temperatur im Gargut, solange das Gargut aufgeheizt wird.

Die Diffusion von thermischer Energie (Wärme) in das Gargut wird im Allgemeinen durch eine Diffusionsgleichung, die eine partielle Differentialgleichung ist, beschrieben. Als Wärmeleitungsgleichung oder Diffusionsgleichung ist die folgende Formel gut bekannt:

$$\frac{\partial}{\partial t}u(\vec{r},t) = a \cdot \Delta u(\vec{r},t) \tag{1}$$

Dabei ist $u$ die Temperaturverteilung, die von der Ortskoordinate $r$ und der Zeit $t$ abhängt, $T$ die Temperatur, $a$ der Wärmeübergangswiderstand der Oberfläche, und $\Delta$ der Laplace-Operator, der die zweite örtliche Ableitung in alle Raumrichtungen bewirkt.

Für eine ebene Platte, die eine Näherung beispielsweise für ein Steak darstellen kann, lässt sich daraus eine eindimensionale instationäre Wärmeleitungsgleichung herleiten, die leicht zu lösen ist, insbesondere unter der Ausnahme, dass keine Wärmequellen in dem betrachteten Raumabschnitt vorkommen. Die ebene Platte ist immer dann eine gute Näherung, wenn das Gargut scheibenförmig ist, und die Dicke der Scheibe klein gegen deren Querschnitt ist. Die eindimensionale instationäre Wärmeleitungsgleichung ohne Wärmequellen lautet:

$$\frac{\partial}{\partial t}u(x,t) = a \cdot \frac{\partial^2}{\partial x^2}u(x,t) \tag{2}$$

Dabei ist $x$ als Koordinate senkrecht zur Fläche der Platte angesetzt.

Gleichung (2) und deren Lösung sind in der Literatur bekannt, so z. B. in Norbert Elsner et al., Grundlagen der technischen Thermodynamik, Band 2, Wärmeübertragung, Akademieverlag GmbH, Berlin 1993, Seiten 83 - 94. Zur Lösung der Differentialgleichung werden dort dimensionslose Größen eingeführt:

Die dimensionslose Ortskoordinate $\xi$

$$\xi = \frac{x}{L}; \quad (0 \le \xi \le 1),$$

wobei L die halbe Dicke der Platte ist,
die dimensionslose oder relative Übertemperatur $\theta$

$$\theta = \frac{T - T_0}{T_1 - T_0}; \quad (0 \le \theta \le 1),$$

wobei $T_0$ die Temperatur des Garguts zu Beginn des Garprozesses und $T_1$ die Temperatur des Garraums ist, die Fourier-Zahl als dimensionslose Zeit Fo

$$Fo = \frac{a \cdot t}{L^2};$$

und die Biot-Zahl als dimensionsloser Wärmeübergang Bi

$$Bi = \frac{\alpha \cdot L}{\lambda},$$

mit $\lambda$ als der Wärmeleitfähigkeit und $\alpha$ als dem Wärmeübergangswiderstand. Die Größe $L/\lambda$ kann bis auf konstante Geometriefaktoren als Wärmeleitwiderstand bezeichnet werden. Die Biot-Zahl Bi vergleicht den Wärmewiderstand an der Oberfläche, der proportional $1/\alpha$ ist, mit dem Wärmewiderstand von der Oberfläche bis ins Innere des Körpers,

der proportional $L/\lambda$ ist. So erhält man eine Ähnlichkeitsdarstellung der Differentialgleichung (2) mit Rand- und Anfangsbedingungen, die für die analytische Lösung und praktische Anwendung besonders zweckmäßig ist:

$$\frac{\partial\theta}{\partial Fo} = \frac{\partial^2\theta}{\partial\xi^2} \qquad (3)$$

Als Lösung ergibt sich daraus nach Elsner et al.:

$$\theta(\xi, Bi, Fo) = \sum_{k=1}^{\infty} \frac{2\cdot\sin(q_k)}{q_k + \sin(q_k)\cdot\cos(q_k)} \cdot \cos(-q_k^2 Fo)\cdot\exp(-q_k^2 Fo) \qquad (4)$$

mit den für die Lösung geeigneten Eigenwerten $q_k = (k - \frac{1}{2})\cdot\pi$. Wie man sofort sieht, konvergiert die unendliche Reihe gemäß Gleichung (4) auf Grund des exponentiellen Terms mit negativem Exponenten. Zur tatsächlichen Berechnung reicht es also aus, lediglich die ersten Glieder der Reihe zu berücksichtigen.

Durch Gleichung (4) ist also die genaue Verteilung der Temperatur in Abhängigkeit von der dimensionslosen Zeit und dem dimensionslosen Ort gegeben. Interessanterweise ergeben sich einfache Lösungen für die Wandtemperatur

$$\theta_W = \theta(Bi, Fo)\ (\xi = 1)$$

und für die Kerntemperatur

$$\theta_K = \theta(Bi, Fo)\ (\xi = 0).$$

Für einen unendlich langen Zylinder lautet die Lösung der dazu passenden Differentialgleichung

$$\theta(\xi, Bi, Fo) = \sum_{k=1}^{\infty} \frac{2 J_1(q_k)}{q_k \cdot \left[J_0^2(q_k) + J_1^2(q_k)\right]} \cdot J_0(q_k\xi)\cdot\exp(-q_k^2 Fo) \qquad (5)$$

mit den bekannten Besselfunktionen $J_i$. Der dimensionslose Ort $\xi$ ist für den Fall eines Zylinders durch das Verhältnis von dessen Abstand vom Mittelpunkt des Zylinders $x$ zum Radius des Zylinders $R_Z$ gegeben:

$$\xi = \frac{x}{R_Z}$$

Dadurch gilt wie für den Fall der ebenen Platten $0 \leq \xi \leq 1$ im Inneren des Zylinders, wobei $\xi = 0$ für den Kern des Zylinders und $\xi = 1$ für die Oberfläche des Zylinders gilt. Für die dimensionslose Zeit, die durch die Fourier-Zahl Fo gegeben ist, und den dimensionslosen Wärmeübergang, der durch die Biot-Zahl Bi gegeben ist, gilt dann:

$$Fo = \frac{a \cdot t}{R_Z^2}; \quad Bi = \frac{\alpha \cdot R_Z}{\lambda}$$

Für eine Kugel, die im Fall von Gargut eine breite Anwendung findet, ergibt sich folgende Gleichung für die Temperaturverteilung

$$\theta(\xi, Bi, Fo) = 2 \cdot \sum_{k=1}^{\infty} \frac{\sin(q_k) - q_k \cos(q_k)}{q_k - \sin(q_k) \cdot \cos(q_k)} \cdot \frac{\sin(q_k \xi)}{q_k \xi} \cdot \exp\left(-q_k^2 Fo\right) \tag{6},$$

die sich noch weiter vereinfachen lässt zu:

$$\theta(\xi, Bi, Fo) = 2 \cdot \sum_{k=1}^{\infty} (-1)^{k+1} \cdot \frac{\sin(-q_k \xi)}{q_k \xi} \cdot \exp\left(-q_k^2 Fo\right) \tag{7}$$

Die Eigenwerte $q_k$ sind hier durch $q_k = k \cdot \pi$ gegeben. Der dimensionslose Ort $\xi$ ist für den Fall der Kugel durch das Verhältnis von dessen Abstand vom Mittelpunkt des Zylinders $x$ zum Radius des Zylinders R gegeben:

$$\xi = \frac{x}{R}$$

Dadurch gilt wie für den Fall der ebenen Platten und des Zylinders $0 \leq \xi \leq 1$ im Inneren der Kugel, wobei $\xi = 0$ für den Kern der Kugel und $\xi = 1$ für die Oberfläche der Kugel gilt.
Die dimensionslose Zeit $Fo$ und der dimensionslosen Wärmeübergang Bi sind für den Fall der Kugel mit dem Radius R gegeben durch

$$Fo = \frac{a \cdot t}{R^2}; \quad Bi = \frac{\alpha \cdot R}{\lambda}.$$

Für die Temperaturleitfähigkeit oder thermische Diffusivität $a$ gilt

$$a = \frac{\lambda_W}{c_p \cdot \rho},$$

mit $\lambda_W$ als der Wärmeleitfähigkeit, $c_p$ als der spezifischen Wärme bei konstantem Druck und $\rho$ als der Dichte des Materials des Körpers.
Auch die hier beschriebenen unendlichen Reihen konvergieren stark, so dass die Berechnung z. B. nach dem 8. Glied oder auch schon früher z. B. nach dem 6. oder 4. Glied der Reihe abgebrochen werden kann. Für Geometrien, die zwischen den hier vorgestellten Lösungen liegen, lassen sich folgende Ansätze finden, die auf dem Verhältnis des Volumens $V$ des Körpers zu dessen wärmeübertragender Oberfläche A basieren:

Ein Körper, der am ehesten einer ebenen Platte entspricht, kann durch $L = \dfrac{V}{A}$ angenähert werden (z. B. Steaks, Schnitzel oder Blechkuchen);

für Körper, die einem unendlich langen Zylinder am ehesten ähneln, ist $R = \dfrac{2V}{A}$ anzusetzen (z. B. Würste, Schweinelende am Stück oder Aubergine); und

für Körper, die am ehesten einer Kugel ähneln, gilt $R = \dfrac{3V}{A}$ (z. B. Großbraten, Kochschinken oder Kartoffelknödel).

Mit diesen Lösungen der Differentialgleichung (Gleichung (1)) ist es möglich, auch bei unbekannter Wärmeleitfähigkeit die Temperatur im Kern eines Garguts mit Hilfe der Randbedingungen $\xi = 0$ zu bestimmen. Als weitere Annahme muss die Wärmekapazität sowie die Wärmeleitfähigkeit im Inneren des Garguts in guter Näherung konstant sein und zumindest grob eine der hier aufgeführten Geometrien vom Gargut verwirklicht werden. Durch eine numerische Berechnung sind aber auch für andere Formen Temperaturverläufe im Gargut und somit weitere Lösungen der Differentialgleichung bestimmbar.

Der Temperaturverlauf im Inneren eines homogenen Garguts ist also bei bekannter Form und bekanntem Wärmeeintrag an der Oberfläche des Garguts charakteristisch für einen Garfortschritt und hängt auf einer geeignet normierten Zeit- und Temperaturskala nur vom Ort der Temperaturerfassung im Gargut ab. Durch diesen charakteristischen Verlauf lässt sich bei zumindest näherungsweise bekannter Form also der Ort eines Temperatursensors in einem Gargut bestimmen. Mit Hilfe dieses Orts lässt sich wiederum der Temperaturverlauf im Kern des Garguts berechnen.

Es lässt sich auch näherungsweise die Form des Garguts bestimmen, indem der gemessene Temperaturverlauf mit den möglichen Temperaturverläufen für verschiedene bekannte Formen verglichen wird. Durch einen Vergleich der normierten Zeitskala mit der tatsächlichen Zeitskala lassen sich Informationen über thermische Eigenschaften und Größe des Garguts ableiten. So kann anhand des am besten passenden Temperaturverlaufs eine geeignete Lösung der Differentialgleichung (Gleichung (1)), wobei die verschiedenen Lösungen hier durch die Gleichungen (4), (5), (6) und (7) beschrieben sind, ausgewählt werden, um mit dieser Lösung die Kerntemperatur des Garguts zu berechnen.

Eine zusätzliche Vereinfachung ergibt sich, wenn angenommen wird, dass die Temperatur an der Oberfläche des Garguts $T_1 = 100\ °C$ oder genauer der Siedetemperatur des Wasser entspricht. Diese Annäherung gilt eigentlich für einen Bereich direkt unter der Oberfläche des Garguts, der unter einer ausgetrockneten Kruste liegt, die im Laufe des Garprozesses die Bräunung des Lebensmittels bestimmt. Diese ausgetrocknete Kruste ist jedoch so dünn und thermisch so gut an die Schicht mit Siedetemperatur angekoppelt, dass die Näherung für die Oberfläche praktisch genau gilt. Die Temperatur der Oberfläche des Garguts steigt im wesentlichen nicht über die Siedetemperatur des Wasser, da die meisten Lebensmittel einen großen Anteil Wasser enthalten und die Verdampfung des Wassers an deren Oberfläche, wegen der großen Verdampfungswärme des Wassers, also dem relativ großen Energiebetrag, der zur Verdampfung von Wasser notwendig ist, zu einer Stabilisierung der Oberflächentemperatur führt. Diese Näherung ist besonders gut bei größeren Lebensmittelstücken erfüllt, da die Zeit, in der die Oberflächentemperatur des Garguts die Siedetemperatur des Wassers erreicht, also von der Ausgangstemperatur $T_0$ auf $T_1$ steigt, im Vergleich zur gesamten Garzeit sehr klein ist.

Dann spielt die Wirkung der isolierenden Schicht des Garmediums, die durch den Wärmeübergangswiderstand mitbestimmenden Wert $\alpha$ ausgedrückt wird, keine Rolle mehr. Die Lösung der Wärmeleitungsgleichung ist nicht mehr vom Wärmeübergang des Garmediums auf das Gargut abhängig, und die Biot-Zahl Bi kann als unendlich groß angenommen werden. Der Annahme, dass Bi gegen unendlich geht, liegt die physikalische Annahme zugrunde, dass der Wärmewiderstand an der Oberfläche des Garguts vernachlässigbar ist. Die Eigenwerte werden dann unabhängig von der Biot-Zahl Bi. Somit sind die Gleichungen (4), (5), (6) und (7) nicht mehr von der Biot-Zahl abhängig. Die Abhängigkeit der Gleichungen von der Biot-Zahl kann dann also vernachlässigt werden. Dadurch ist effektiv die Anzahl der möglichen Lösungen der Differentialgleichung reduziert.

Das Gleiche gilt, wenn beim Dämpfen Wasser an der Oberfläche eines Garguts kondensiert. Auch dann ist die Annahme, dass die Temperatur der Oberfläche des Garguts bei der Siedetemperatur des Wassers liegt, eine geeignete Randbedingung. Die Biot-Zahl, die den Wärmeübergang beschreibt, spielt dann also auch keine Rolle mehr.

Findet ein Garen bei einer Temperatur unterhalb der Siedetemperatur des Wassers statt, so kann auch die Abhängigkeit vom Wärmeübergang, also der Biot-Zahl, bei den Lösungen der Wärmeleitungsgleichung berücksichtigt werden. Dabei wird dann z. B. die Abhängigkeit der $\alpha$-Zahl von der Strömungsgeschwindigkeit des Garmediums berücksichtigt, um zu einer realistischen Abschätzung der Biot-Zahl zu kommen. Die in Frage kommenden Lösungen werden in diesem Fall also berücksichtigt und können, wenn ihre vorhergesagten Temperaturverläufe den gemessenen Temperaturverläufen entsprechen, ausgewählt werden.

Annäherungen, wie die zur Biot-Zahl Bi getroffenen Annahmen, stellen eine akzeptable Vereinfachung des hier aufgeführten Problems der Temperaturverteilung in Abhängigkeit von der Zeit in einem Gargut dar. So lassen sich mit Hilfe des erfindungsgemäßen Verfahrens bessere Werte für die Kerntemperatur bestimmen, als wenn die Temperatur eines Temperatursensors einfach mit der Kerntemperatur gleichgesetzt oder gemäß anderer Verfahren, die im Stand der Technik vorgeschlagen werden, bestimmt wird.

Alternativ zu allgemeinen Annahmen lassen sich auch spezifischere Annahmen treffen, indem z. B. Informationen bei der Auswahl des geeigneten Garprogramms durch den Anwender ausgewertet werden, gezielte Abfragen zum Gargut durchgeführt werden, Messungen weiterer Temperatursensoren im Gargut verwendet werden und/oder die Messergebnisse anderer Sensoren ausgewertet werden. Mit solchen Annahmen lassen sich die möglichen Lösungen der Differentialgleichung weiter einschränken.

Weitere Merkmale und Vorteile der Erfindung ergeben sich aus der nachstehenden Beschreibung, in der Ausführungsbeispiele der Erfindung anhand von schematischen Zeichnungen im einzelnen erläutert werden.

Dabei zeigt:

Figur 1    ein Gargut im Querschnitt mit einem Kerntemperatursensor;

Figur 2    den qualitativen Temperaturverlauf in einem plattenförmigen Gargut der Dicke 450 mm zu einem Zeitpunkt $t_3$;

Figur 3    den qualitativen Temperaturverlauf in einem plattenförmigen Gargut der Dicke 300 mm zu einem Zeitpunkt $t_3$;

Figur 4    den qualitativen Temperaturverlauf in einem plattenförmigen Gargut der Dicke 200 mm zu einem Zeitpunkt $t_3$;

Figur 5    die qualitativen Temperaturverläufe in dem plattenförmigen Gargut der Dicke 300 mm von Figur 3 zu den Zeitpunkten $t_1$, $t_2$, $t_3$ und $t_4$;

Figur 6    die quantitativen zeitabhängigen Temperaturkurven für eine Kugel mit dem Radius R; und

Figur 7    ein erfindungsgemäßes Gargerät.

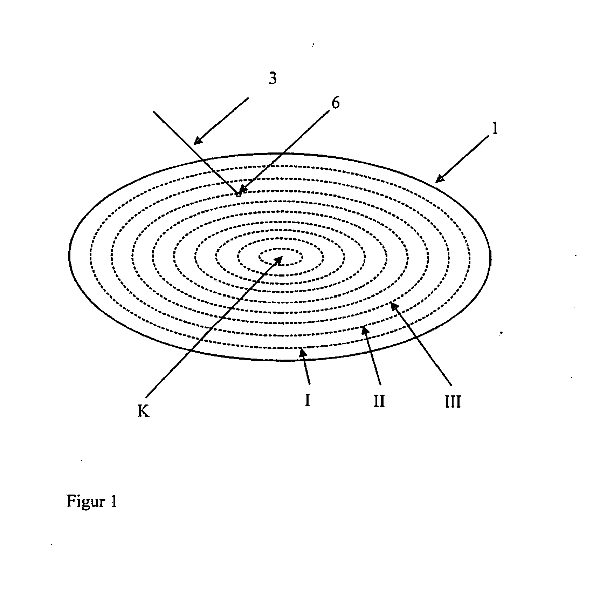

Figur 1 zeigt ein Gargut 1 mit ovalem Querschnitt, in das ein Temperatursensorspieß 3, an dessen Spitze ein einziger Temperatursensor 6 angebracht ist, eingebracht wurde. Die gestrichelten Linien im Inneren des Garguts 1 können einerseits die Isothermen im Gargut 1 während des Aufheizens des Garguts 1 darstellen, und können andererseits die Eindringtiefe der von außen eindiffundierenden Wärme in das Gargut 1 während der Anfangsphase des Garens symbolisieren.

Ein solches Aufwärm-Model ist z. B. für einen Großbraten zu wählen, dessen Form in guter Nährung einem Elypsoid entspricht. Dies kann unter anderem daran erkannt werden, dass ein Anwender ein Garprogramm für Großbraten mit Hilfe einer Bedienoberfläche an einem Gargerät auswählt, oder auch durch Auswertung der Signale eines optischen Sensors oder eines Ultraschallsensors, zur Bestimmung der Größe und Form des Garguts 1. Als weitere Annahme zur Beschränkung auf eine geringere Anzahl von Lösungen der Differentialgleichung wird vorausgesetzt, dass die Temperatur $T_0$ im Inneren des Garguts 1 zur Startzeit $t_0$ überall gleich ist und dem Gargut 1 von Außen ein gleichmäßiger Wärmeeintrag aufgeprägt wird. Letztere Annahme kann jedoch modifiziert werden, wenn beispielsweise bestimmte Asymmetrien des Wärmeeintrags im Gargerät bekannt sind, eine entsprechende Kundeneingabe getätigt wird oder durch die Messungen mit den Sensoren nahegelegt wird, dass kein gleichmäßiger Wärmeeintrag an der Oberfläche des Garguts 1 stattfindet.

Die Wärme dringt dann beim Aufwärmen zunächst von Außen in das Gargut 1 ein. Zu einem Zeitpunkt $t_1$, wird die äußerste gestrichelte Linie I mit Wärme beaufschlagt, während die Temperatur an der Spitze des Temperatursensorspieß 3 entspricht noch der Ausgangstemperatur des Garguts 1. Zum Zeitpunkt $t_2$ beginnt die Temperatur an der zweiten gestrichelten Linie II von außen zu steigen. Zum Zeitpunkt $t_3$ beginnt die Temperatur an der dritten gestrichelten Linie III von außen zu steigen. Somit beginnt zu diesem dritten Zeitpunkt $t_3$ auch die Temperatur des Temperatursensors 6 an der Spitze des Temperatursensorspießes 3 erstmals zu steigen. Die Zeitdifferenz zwischen dem Beginn des Garprozesses und dem Beginn des Anstiegs der Temperatur am Temperatursensor 6, $t_3$-$t_0$, beinhaltet also bereits eine erste Information zur Einstecktiefe des Temperatursensors 6 und zur Wärmeleitfähigkeit des Garguts 1 und beschränkt somit bereits die möglichen Lösungen der Differentialgleichung, so dass bereits hier eine erste Vorauswahl getroffen werden kann. Bei bekannter Wärmeleitfähigkeit liefert der Zeitpunkt $t_3$ des ersten erfassten Temperaturanstiegs also direkt eine Information über die Position des Temperatursensors 6 im Gargut 1. Der Wärmeeintrag im Gargut 1 pflanzt sich, wie oben beschrieben, immer weiter fort und erreicht schließlich auch den Kern K des Garguts 1. Genau genommen beginnt die Temperatur im gesamten Körper sofort ab dem Beginn des Erwärmungsprozesses zu steigen. Dieser Anstieg im Inneren ist Anfangs unmessbar klein. Man kann sich dann aber einen Schwellenwert des Temperaturanstiegs definieren, der von der Genauigkeit der gewählten Meßmethode abhängt, zu dem man den Beginn des Anstiegs der Temperatur definiert. Die obige Betrachtung bleibt auch dann prinzipiell richtig.

Die für den Braten identifizierte Form des Elypsoids entspricht am ehesten der einer Kugel, so dass Gleichung (7) zur Berechnung der Kerntemperatur verwendet werden kann. Dabei wird als Radius für die Kugel das dreifache Volumen des Elypsoids geteilt durch dessen Oberfläche angesetzt.

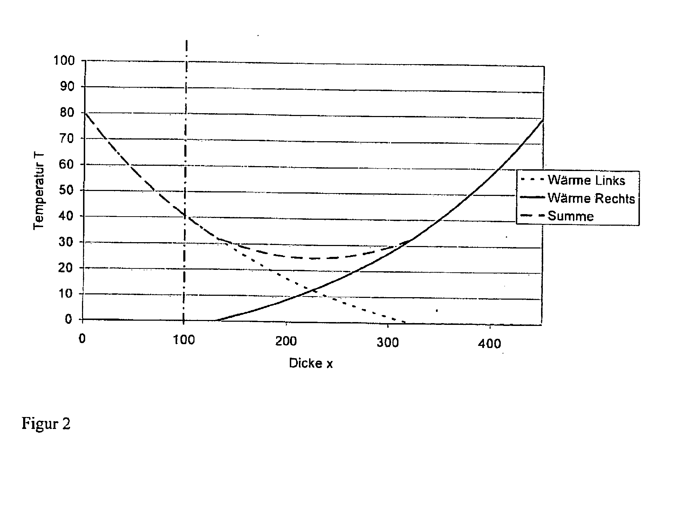

Figur 2 zeigt qualitativ die Temperaturverteilung in einer Platte, die eine gute Näherung für flache Lebensmittel darstellt, mit der Dicke 450 mm zu einem Zeitpunkt $t_3$, die sich aus der Summe der Wärmeeinträge von der rechten und der linken Seite der Platte ergibt. Die Wärmeeinträge von den beiden Seiten sind durch einfache Exponentialfunktionen genähert, um den prinzipiellen Verlauf der Temperaturverteilung darzustellen.

Wie in Figur 2 zu erkennen ist, ist in den Randbereichen zwischen 0 mm und 130 mm bzw. 320 mm und 450 mm noch keine Wirkung des Wärmeeintrags von der jeweils gegenüberliegenden Seite zu erkennen. In dem Bereich zwischen 130 mm und 320 mm, also in der Mitte des Garguts, ist aber bereits die Wirkung von der jeweils anderen Seite an dem Anstieg der Temperatur in diesem Bereich des Garguts zu erkennen. Ist die Wärmeleitfähigkeit des Garguts bekannt, lässt sich aus der Information über den zeitlichen Verlauf der Temperatur eines im Gargut platzierten Temperatursensors bei bekannter Form des Garguts (hier einer Platte), auf die Position des Temperatursensors im Gargut zurückschließen. Befindet sich der Temperatursensor im Beispiel nach Figur 2 in einer Einstecktiefe von 100 mm im Gargut, so ist zum Zeitpunkt $t_3$ zwar bereits eine Aussage über die Einstecktiefe des Temperatursensors möglich, aber noch keine Aussage über die Dicke des Garguts, da die Wärme von der anderen Seite noch nicht bis zu dem Temperatursensor vorgedrungen ist.

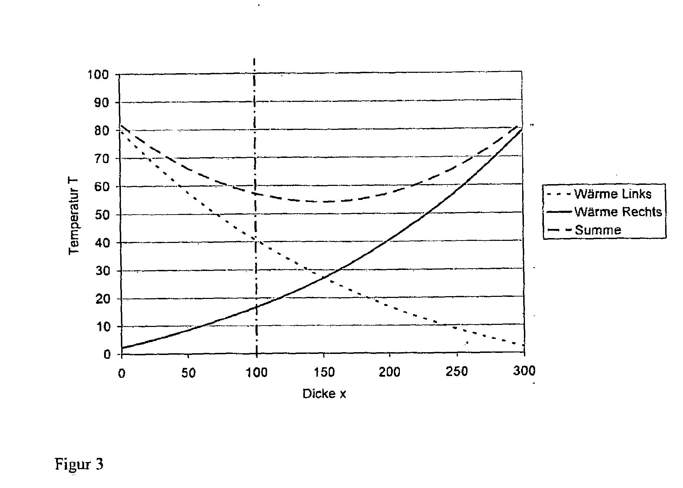

Figur 3 zeigt die qualitative Temperaturverteilung im Inneren eines plattenförmigen Lebensmittels mit einer geringeren Dicke (300 mm) als im Fall der Figur 2, jedoch zum gleichen Zeitpunkt $t_3$, wieder als Summe der von links und rechts eindringenden Wärme in das Gargut, wobei auch die Wärmeleitfähigkeit und die Wärmekapazität des Garguts wie im Fall der Figur 2 gewählt ist. Die Figuren 2 und 3 unterscheiden sich also lediglich in der Dicke des jeweiligen Garguts. Ein Temperatursensor in einer Einstecktiefe von 100 mm in Figur 3 misst, im Gegensatz zu dem in Figur 2, bereits eine deutliche Abweichung des Temperaturanstiegs, da die Differenz zwischen dem Temperaturverlauf von der nur von einer Seite kommenden Wärme und der Summe der beiden Temperaturverläufe, die dem tatsächlichen Temperaturverlauf in der Platte entspricht, bei der Einstecktiefe von 100 mm in der Größenordnung von 15 °C liegt. Aus dieser Beschleunigung des Temperaturanstiegs, der durch den Wärmeeintrag von der gegenüber liegenden Seite verursacht wird, lässt sich also auf die Dicke des Garguts zurückschließen. Da die Temperaturverteilung im Inneren des Garguts mit Hilfe von Gleichung (4) abschätzbar ist, lässt sich so auf die Temperatur im Zentrum des Garguts bei 150 mm zurückschließen und ein guter Wert für die Kerntemperatur des Garguts finden.

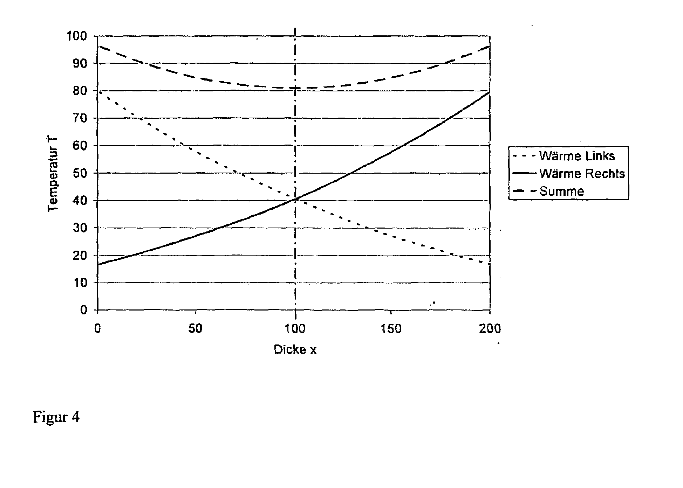

Figur 4 zeigt den qualitativen Temperaturverlauf in einem Gargut mit den Eigenschaften wie im Zusammenhang mit den Figuren 2 und 3 bereits beschrieben, jedoch mit einer Dicke von 200 mm, zum Zeitpunkt $t_3$. Wiederum ergibt sich die Temperaturverteilung als Summe der von rechts und links eindringenden Wärme in das Gargut. Die Überhöhung der Temperatur in einer Einstecktiefe von 100 mm, die hier genau der Kerntemperatur entspricht, also die Abweichung der Temperaturerhöhung, die durch einen Wärmeeintrag von lediglich einer Seite verursacht würde, beträgt hier ungefähr 40 °C zum Zeitpunkt $t_3$.

Anhand der Figuren 2, 3 und 4 ist also gut zu erkennen, dass bei bekannter Form, Wärmeleitfähigkeit und Wärmekapazität des Garguts eine sehr gute Abschätzung über die Position eines Temperatursensors im Gargut und somit auf die Kerntemperatur des Garguts anhand der zeitlichen Entwicklung der Temperatur der Messstelle gelingt.

Bei anderen Geometrien von Gargütern können noch weitere Beiträge zum Wärmeeintrag in das Gargut zum Temperaturanstieg an einer bestimmten Stelle im Gargut beitragen. Bei einem kugelförmigen Gargut kämen z. B. auch noch Beiträge der Wärmeflüsse von allen Seiten der Kugel, senkrecht zur Verbindungslinie der Temperaturmessstelle und dem Mittelpunkt der Kugel hinzu, so dass mit einer stärkeren Überhöhung und auch mit einer früheren Überhöhung des Temperaturanstiegs zu rechnen ist. Dennoch bleibt der Zeitpunkt des Beginns des Temperaturanstiegs, die Geschwindigkeit des Temperaturanstiegs und die Beschleunigung des Temperaturanstiegs bei bekannter Form, Wärmeleitfähigkeit und Wärmekapazität des Garguts ein Maß für die Position der Messstelle im Gargut, für die Größe des Garguts und für die Kerntemperatur des Garguts. Zudem lassen sich aus diesen Messgrößen beispielsweise Informationen über die Form des Garguts, bei bekannter Wärmeleitfähigkeit und Wärmekapazität ableiten, so dass diese Informationen auch zur Auswahl der geeigneten Lösung der Differentialgleichung verwendet werden können.

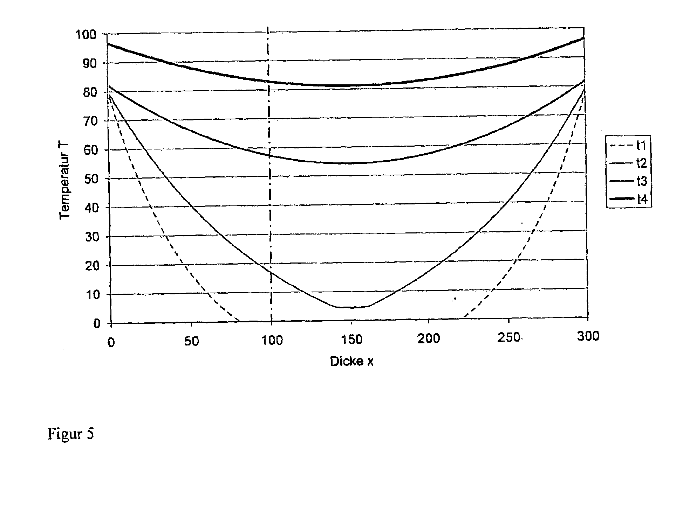

Figur 5 zeigt den qualitativen Temperaturverlauf in einem plattenförmigen Gargut (nicht gezeigt) der Dicke 300 mm zu unterschiedlichen Zeitpunkten $t_1$, $t_2$, $t_3$ und $t_4$. Zum Zeitpunkt $t_0$ liegt die Temperatur überall im Gargut gleichmäßig bei 0 °C. Zu diesem Zeitpunkt wird ein nicht gezeigter Temperatursensor in 100 mm Tiefe im Gargut platziert. Zum Zeitpunkt $t_1$ ist die Temperatur im Gargut zwar bereits in den Randzonen angestiegen, an der Messstelle jedoch noch nicht. Irgendwann zwischen den Zeitpunkten $t_1$ und $t_2$ beginnt die Temperatur der Messstelle zu steigen.

Bei bekannter Wärmeleitfähigkeit und Wärmekapazität sowie bei bekannter Form des Garguts lässt sich aus dem Zeitpunkt des Beginns des Temperaturanstiegs abschätzen, dass die Temperaturmessstelle 100 mm von der Oberfläche des Garguts entfernt positioniert ist, und dass das Gargut mindestens 200 mm dick sein muss. Zum Zeitpunkt $t_2$ ist die Temperatur der Messstelle bereits um 18 °C angestiegen.

Aus der Geschwindigkeit des Temperaturanstiegs ist abschätzbar, dass die Temperaturerhöhung ausschließlich durch einen Wärmeeintrag von einer einzigen Seite stattgefunden haben kann, während die Temperatur aber bereits über 150 mm in das Gargut eingedrungen sein muss. Daraus ist zum Zeitpunkt $t_2$ der Schluss zu ziehen, dass die Dicke des Garguts zumindest 250 mm betragen muss. Irgendwann zwischen den Zeitpunkten $t_2$ und $t_3$ beschleunigt sich der Temperaturanstieg an der Messstelle, abweichend von dem bei einseitigem Temperatureintrag in das Gargut. Dies wird genau dann beginnen, wenn der Wärmeeintrag von der Seite, die der Seite gegenüber liegt, die der Messstelle am nächsten ist, auch einen Beitrag zum Anstieg der Temperatur der Messstelle liefert.

Die Beschleunigung des Temperaturanstiegs an der Messstelle wird anhand der zeitlichen Entwicklung der Temperatur an der Messstelle erkannt. Daraus lässt sich die Dicke des Garguts berechnen, so dass mit Hilfe von Gleichung (4), unter der Voraussetzung, dass der dimensionslose Ort $\xi$ im Kern des Garguts gleich Null ist, die Temperatur im Kern des Garguts berechnet werden kann.

Die qualitativen Verläufe der Figuren 2 bis 5, die mit Hilfe einfacher e-Funktionen und deren Überlagerung gewonnen wurden, stellen keine exakten Kurvenverläufe gemäß Gleichung (4) dar und dienen lediglich der Veranschaulichung eines Prinzips, das zu einer erfindungsgemäßen Lösung des Problems der Kerntemperaturbestimmung führt. Es ist erfindungsgemäß also auch möglich, eine einfache Näherung für eine Lösung der Differentialgleichung auszuwählen. Erfindungsgemäß umfassen die Lösungen der Differentialgleichung also auch Näherungslösungen und sind nicht auf mathematisch exakte Lösungen beschränkt. Eine exaktere Lösung für eine Kugel nach Gleichung (7) wird im folgenden besprochen.

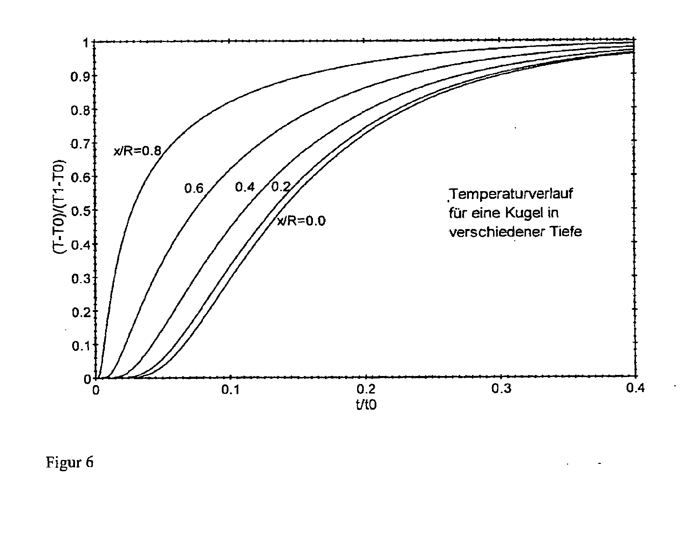

Figur 6 zeigt die quantitativen zeitabhängigen Temperaturkurven $T (\xi, t)$ für eine Kugel, deren Oberfläche zum Zeitpunkt $t_0$ von der anfänglichen Temperatur $T_0$ auf die Temperatur $T_1$ erwärmt wurde. Falls die Erwärmung nicht sprunghaft erfolgt, aber in einem gegenüber der Gesamtzeit kurzen Zeitraum, muss der Zeitpunkt $t_0$ geeignet in die Erwärmungsphase gelegt werden. Dies hat Auswirkungen auf die Form der Temperaturkurve an Orten nahe der Oberfläche $\xi$=1. Der Einfluss auf die Temperaturverläufe im Inneren des Körpers ist jedoch gering. Die Kurven sind mit Gleichung (7) berechnet.

Der Parameter $t_0$ bestimmt die Zeitskala des Temperaturverlaufs und dient der Normierung der dimensionslosen Zeit, genauer gesagt der Fourier-Zahl Fo:

$$Fo = \frac{a \cdot t}{R^2} = \frac{t}{t_0} \quad \Rightarrow \quad t_0 = \frac{R^2}{a}$$

Die in Figur 6 gezeigten Kurven sind mit $\xi = \dfrac{x}{R}$ parametrisiert, wobei $R$ der Radius der Kugel und $x$ der Abstand vom Mittelpunkt der Kugel ist. Für den Fall eines Garguts in einem Garraum ist $x$ also der Abstand der Temperaturmessstelle vom Kern eines kugelförmigen Garguts.

Durch den Vergleich der in Figur 6 gezeigten, also nach Gleichung (7) berechneten Kurven mit einem beispielsweise in einem Aufbau nach Figur 1 mit Hilfe eines Temperatursensors 6, der mit einem Temperatursensorspieß 3 in ein Gargut 1 eingebracht wurde, gemessenen Temperaturverlauf lässt sich der Parameter $t_0$ bestimmen. Dieser Parameter $t_0$ ist eine thermische Zeitkonstante, die das Gargut charakterisiert. Mit der Hilfe von weiteren bekannten Daten, z. B. der thermischen Diffusivität, die für viele Lebensmittel ähnlich ist, lässt sich wiederum die Größe der Kugel bestimmen.

Falls weitere Temperaturmesskurven an anderen Orten im Gargut bekannt sind, können diese zusammen mit der Information, dass beide auf derselben Zeitskala ablaufen, zur Verbesserung der Bestimmung der Kerntemperatur genutzt werden. Ist auch noch der Abstand zwischen den Orten von weiteren Temperatursensoren bekannt, wie beispielsweise in einem Kemtemperaturfühler, kann dies ebenfalls zu einer Bestimmung der Größe der Kugel herangezogen werden, wenn Annahmen über die Lage der Temperatursensoren gemacht werden können. Die Temperatursensoren könnten z. B. näherungsweise auf einer Linie mit dem Mittelpunkt der Kugel liegen, da angenommen werden kann, dass ein Anwender den Kern eines zu garenden Garguts beim Plazieren treffen möchte.

Für den Fall einer Kugel lassen sich mit den Gleichungen (6) oder (7) also für bestimmte normierte Orte $\xi = \dfrac{x}{R}$

in der Kugel bestimmte normierte Zeitpunkte $Fo = \dfrac{t}{t_0}$ finden, bei denen die normierte Temperatur $\theta = \dfrac{T - T_0}{T_1 - T_0}$

den Wert 0,02 bzw. 0,2 erreicht.

Diese Zusammenhänge sind in der folgenden Tabelle zusammen mit dem Quotienten der normierten Zeitpunkte angegeben:

| $\xi = \dfrac{x}{R}$ | $Fo(\theta = 0{,}2)$ | $Fo(\theta = 0{,}02)$ | $\dfrac{Fo(T = 0{,}2)}{Fo(T = 0{,}02)}$ |
|---|---|---|---|
| 0,8 | 0,010 | 0,0034 | 2,94 |
| 0,6 | 0,033 | 0,0126 | 2,62 |
| 0,4 | 0,059 | 0,0256 | 2,30 |
| 0,2 | 0,078 | 0,0386 | 2,02 |
| 0 | 0,084 | 0,0448 | 1,88 |

Wie in der Tabelle zu erkennen ist, kann der normierte Ort $\xi$ bestimmt werden, ohne die thermische Zeitkonstante $t_0$ zu kennen. Daraus lässt sich der Temperaturverlauf im Mittelpunkt der Kugel, also im Kern des kugelförmigen Garguts bei $\xi = 0$ berechnen.

Eine weitere Verbesserung der Kerntemperaturbestimmung ergibt sich, wenn die Temperatur nicht einfach gemäß der Tabelle anhand von zwei Werten an zwei Stellen im Gargut zu zwei Zeitpunkten abgelesen wird, sondern statt dessen ein geeigneter numerischer Fit an die gemessene Temperaturkurven, die in Figur 6 dargestellt sind, nach Gleichung (6) oder (7) oder einer anderen Näherungslösung durchgeführt wird. Die Verbesserung resultiert daraus, dass dann die Informationen aus dem gesamten Temperaturverlauf in die Berechnung eingehen, und nicht nur der Wert an zwei Stellen.

Für andere Geometrien, wie die der Platte nach Gleichung (4) oder die des Zylinders nach Gleichung (5) oder für Zwischenlösungen hierzu, kann das erfindungsgemäße Verfahren zur Kerntemperaturbestimmung gleichsam angewendet werden. Es ist auch möglich, die Wärmeleitungsgleichung (1) für andere Geometrien numerisch zu lösen und diese zur Berechnung der Kentemperatur zu verwenden. Dazu kann die Form der Oberfläche des Garguts gemessen und mit einem Fit durch eine Funktion angenähert werden, um diese Funktion als Randbedingung für die Lösung der Differentialgleichung zu verwenden.

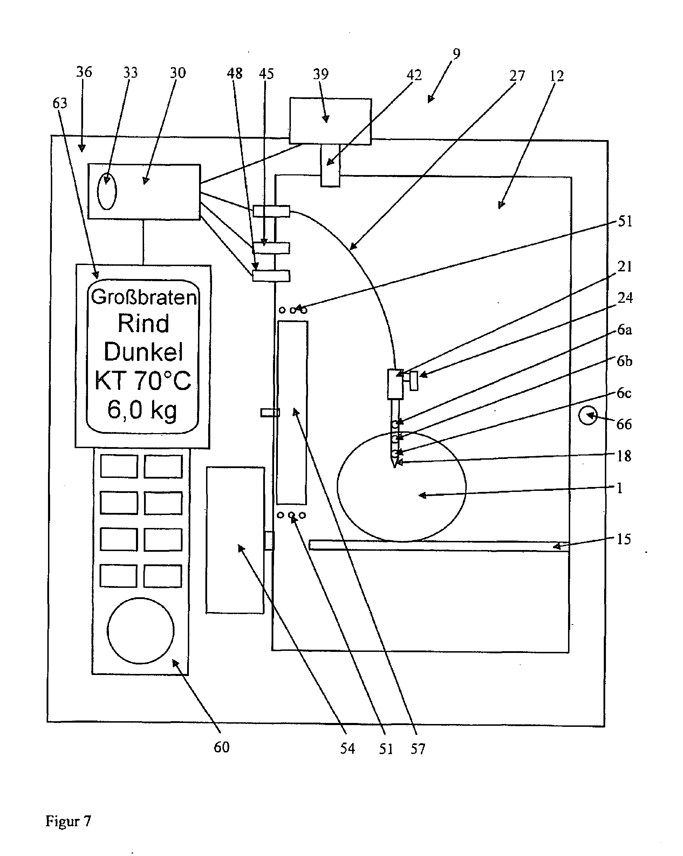

Figur 7 zeigt ein erfindungsgemäßes Gargerät 9, in dessen Garraum 12 ein Gargut 1 auf einem Gargutträger 15 liegt. In das Gargut 1 ist ein Temperatursensorspieß 3 eingeführt, der mit drei Temperatursensoren 6a, 6b, 6c in der Lanze 18 des Temperatursensorspießes 3 ausgestattet ist. In dem hier aufgeführten Beispiel liegen zwei der Temperatursensoren 6b, 6c innerhalb des Garguts 1, während einer der Temperatursensoren 6a außerhalb des Garguts 1 platziert ist. Am Griff 21 des Temperatursensorspießes 3 ist ein weiterer Sensor in Form eines Infrarotsensors 24 angebracht, mit dessen Hilfe die Oberflächentemperatur des Garguts 1 bestimmt werden kann. Der Temperatursensorspieß 3 ist mit allen drei Temperatursensoren 6a, 6b, 6c und dem Infrarotsensor 24 über ein Kabel 27 mit einer Recheneinheit 30 verbunden, die ihrerseits mit einem Speicher 33 verbunden ist. Die Recheneinheit 30 und der Speicher 33 sind in einem Installationsraum 36 des Gargeräts 9 untergebracht.

Die Recheneinheit 30 ist zusätzlich verbunden mit einem optischen Sensor 39, der über eine Optik 42 das Innere des Garraums 12 überwacht. Des weiteren stehen auch noch ein Garraumtemperatursensor 45 zur Bestimmung der Garraumtemperatur und ein Gassensor 48 zur Überwachung der Garraumatmosphäre mit dem Garraum 12 mit der Rechercheneinheit 30 in Verbindung. Die Recheneinheit 30 beinhaltet einen Zeitgeber und ist in der Lage, die Daten aller Sensoren 6a, 6b, 6c, 24, 39, 45, 48 zu verarbeiten, einschließlich deren zeitlichen Entwicklungen, und gegebenenfalls im Speicher 33 zwischenzuspeichern. Die Rohdaten und die durch Berechnungen gewonnenen Werte können mit hinterlegten Werten aus dem Speicher 33 verglichen werden. Die Recheneinheit 30 kann auch alle für einen Vergleich notwendigen Rechenformeln und Kurvenverläufe aus dem Speicher 33 laden. Auf Grund der bei der Auswertung gewonnenen Informationen kann die Recheneinheit 30 sowohl eine Heizung 51 als auch einen Dampfgenerator 54 und ein Lüfterrad 57 ansteuern, so dass im Garraum 12 das für das Gargut 1 geeignete Klima bezogen auf Temperatur, Feuchte und Luftgeschwindigkeit herrscht.

Des weiteren ist die Recheneinheit 30 mit einer Eingabeeinrichtung 60 und einer Anzeigeeinrichtung 63 verbunden. Ein Anwender kann über die Eingabeeinrichtung 60 sowohl ein geeignetes Garprogramm und seine Wunschparameter, wie z. B. Kerntemperatur und Bräunung des Lebensmittels, auswählen, als auch zusätzliche Angaben zum Gargut machen, die geeignete Informationen zu den Randbedingungen der durch die Recheneinheit 30 zu lösenden Gleichungen liefert. Auf der Anzeige 63 kann der Anwender kontrollieren, welche Eingaben er getätigt hat.

Über die Anzeigeeinrichtung 63 können dem Anwender auch verschiedene andere Angaben angezeigt werden. Dazu zählen insbesondere der Name des ablaufenden Programms, die Einstellung der Wunschparameter, die aktuelle Kerntemperatur des Garguts 1, und die voraussichtliche Dauer des Garprozesses, die aus den Gleichungen (4), (5) und (7) berechnet werden kann, sobald die Temperatur im Kern des Garguts 1 bestimmt werden konnte und deren Verlauf über einen gewissen Zeitraum durch die Recheneinheit 30 verfolgt wurde.

Ein Anwender kann also zunächst über die Eingabeeinrichtung 60 ein geeignetes Garprogramm auswählen, die Wunschparameter einstellen und diese Eingaben über die Anzeige 63 kontrollieren. Die Recheneinheit 30 wird sodann ein geeignetes Garprogramm aus dem Speicher 33 laden und ein geeignetes Anfangsklima im Garraum 12 vorbereiten, indem der Garraum 12 über die Heizung 51 geheizt und die gewünschte Anfangsfeuchte mit Hilfe des Dampfgenerators 54 eingestellt wird. Die Temperatur im Garraum 12 wird über den Garraumtemperaturfühler 45 kontrolliert und die Feuchte über den Gassensor 48. Sobald die geeigneten Klimaparameter im Garraum 12 erreicht sind, erzeugt die Recheneinheit 30 auf der Anzeigeeinrichtung 63 eine Aufforderung an den Anwender, das Gargerät 9 mit dem Gargut 1 zu beladen und den Temperatursensorspieß 3 in das Gargut 1 einzustecken.

Aus den Kundeneingaben ist der Recheneinheit 30 bereits bekannt, dass es sich bei dem zu garenden Gargut 1 beispielsweise um einen Großbraten aus Rindfleisch handelt, der bis zu einer Kerntemperatur von 70° C gegart werden soll und nach dem Garen eine dunkle Bräunung aufweisen soll. Des weiteren hat der Anwender nach einer entsprechenden Aufforderung beispielsweise eingegeben, dass das Gargut 1 in etwa 6kg wiegt.

Sobald das Gargut 1 in den Garraum 12 eingebracht wurde, was für das Gargerät 9 z. B. an dem Schließen der Garraumtür (nicht gezeigt) mit Hilfe eines Türkontaktschalters 66, der ebenfalls mit der Recheneinheit 30 verbunden ist, zu erkennen ist, wird ein geeignetes Garprogramm, das zuvor aus dem Speicher 33 geladen wurde, gestartet. Dabei wird z. B. zuerst überprüft, ob der Temperatursensorspieß 3 in das Gargut 1 eingesteckt wurde. Sollte dies nicht der Fall sein, wird auf der Anzeigeeinrichtung 63 der entsprechende Fehler angezeigt und das Garprogramm abgebrochen. Ansonsten wird mit dem Garprogramm fortgefahren.

Der optische Sensor 39 ermittelt über die Optik 42 die Form des Garguts 1. Dazu sind solche optischen Sensoren besonders geeignet, die nicht nur über eine einzige Optik 42 verfügen, sondern das Gargut 1 aus verschiedenen Blickwinkeln aufnehmen können, um ein dreidimensionales Bild des Garguts 1 liefern zu können.

Aus den Informationen des optischen Sensors 39 und der Kundeneingaben wählt die Recheneinheit 30 ein geeignete Lösungen der Differentialgleichung aus, die zur Bestimmung der Kerntemperatur geeignet sind.

Während des Garens wird nicht nur die Temperatur im Inneren des Garguts 1 ansteigen, was von der Recheneinheit 30 mit Hilfe der Temperatursensoren 6b, 6c verfolgt wird, sondern sich auch die Zusammensetzung der Garraumatmosphäre ändern, was mit Hilfe des Gassensors 48 verfolgt wird. Auch die Oberflächentemperatur des Garguts 1 wird sich ändern, was mit Hilfe des Infrarotsensors 24 verfolgt werden kann. Anhand der zeitlichen Entwicklung der Temperatur im Gargut 1 kann dann die Kerntemperatur des Garguts 1 wie beschrieben berechnet werden.

Dabei können alternativ zu den in den Gleichungen 4, 5, 6, 7 angegebenen Lösungen (Lösung von Gröber) auch einfachere Lösungen, wie z. B. nach den Differenzverfahren nach Schmidt (vgl. Günther Maier und Erich Schiffner in "technische Thermodynamik", dritte Auflage, Seiten 294-302), in der DE 19 609 116 A1 vorgeschlagenen (das Crank-Nicolson-Verfahren oder das ADI-Verfahren) oder dergleichen Lösungsverfahren zur Bestimmung der Kerntemperatur, zum Einsatz kommen. Sobald die Kerntemperatur im Gargut 1 bestimmt werden kann, kann sie auf der Anzeigeeinrichtung 63 angezeigt werden.

Sobald die Zielkerntemperatur erreicht ist, wird das Garprogramm beendet und eine entsprechende Anzeige zusammen mit der Aufforderung zum Entnehmen des Garguts 1 aus dem Garraum 12 durch die Recheneinheit 30 auf der Anzeigeeinrichtung 63 angezeigt.

In dem Speicher 33 können neben den Garprogrammen zur Steuerung des Gargeräts 9 und den Rechenformeln und Kurvenverläufen auch die Vergangenheitsdaten von bereits abgelaufenen Programmen und Prozessen für den Zugriff der Recheneinheit 30 hinterlegt sein. Hat ein Kunde ein selbst programmiertes, ein modifiziertes oder ein voreingestelltes Garprogramm z. B. mit dem Namen "Kalbsbraten" belegt, so ist davon auszugehen, dass dieses Garprogramm auch zukünftig für Kalbsbraten verwendet wird. Aus den während eines Garprozesses anhand der Sensoren 6a, 6b, 6c, 24, 39, 45, 48 gemessenen Daten lassen sich nach der Auswertung dieser Daten durch die Recheneinheit 30 für einen spezifischen Garprozeß typische Randbedingungen und der zeitliche Verlauf der Kerntemperatur im Speicher 33 speichern. Diese Daten können bei einer Verwendung des gleichen oder eines ähnlichen Garprozesses wieder abgerufen werden, um geeignete Randbedingungen zu setzen oder für das Problem passende Lösungen der Differentialgleichung zu finden. Dabei kann eine für Garprogramme geeignete Clusteranalyse verwendet werden, wie sie insbesondere in der WO 2004/062372 A3 vorgeschlagen ist.

In einem weiteren Ausführungsbeispiel, das sich Anhand von Figur 7 erklären lässt, wird das Gargut 1 zunächst in den Garraum 12 eingebracht und dann wird der Temperatursensorspieß 3 in das Gargut 1 eingesteckt. Der Gassensor 48 misst die Veränderung der Atmosphäre im Garraum 12, die durch das Gargut 1 verursacht wird. Dabei wird eine Vorauswahl durch die Recheneinheit 30 getroffen, die das Signalmuster des Gassensors 48 mit einem im Speicher 33 hinterlegten Signalmuster vergleicht. Dabei kommt als Gassensor 48 ein Gassensorsystem zum Einsatz, wie es zum Beispiel in der WO 2006/069563 A1 vorgeschlagen ist. Die Recheneinheit 30 erkennt also z. B., dass es sich bei dem Gargut 1 um Rindfleisch handelt, und zeigt dies auf der Anzeigeeinrichtung 63 an.

Gleichzeitig wird mit Hilfe des optischen Sensors 39 die Größe des Garguts 1 bestimmt, wobei zum Beispiel ein großes Fleischstück erkannt wird. Also wird auf der Anzeigeeinrichtung 63 ein Garprogramm für Großbraten vorgeschlagen. Die Recheneinheit 30 lädt das geeignete Garprogramm aus dem Speicher 33 und setzt typische Default-Werte für die Kerntemperatur und die Bräunung (z. B. KT 70°C und Dunkel). Das Garprogramm wird anschließend gestartet. Während des Garprogramms kann mit Hilfe des Gassensors 48 und des optischen Sensors 39 eine genauere Spezifizierung des Garguts 1 durch einen Vergleich der Sensordaten mit Mustersensordaten aus dem Speicher 33 durch die Recheneinheit 30 durchgeführt werden. Das Garprogramm kann dann angepasst werden, indem die Recheneinheit 30 Modifikationen für das Garprogramm aus dem Speicher 33 lädt, die zu den gemessenen Sensordaten passen. Dem Anwender wird die Möglichkeit gegeben, diese Einstellungen über die Eingabeeinrichtung 60 zu verändern.

Mit dem geeigneten Garprogramm wird auch eine oder mehrere geeignete Lösungen oder Näherungslösungen für die Differentialgleichung zur Bestimmung der Kerntemperatur aus dem Speicher 33 in die Recheneinheit 30 geladen. Aus dem zeitlichen Verhalten der über die Temperatursensoren 6b, 6c im Gargut 1 erfassten Temperaturwerte wird dann die geeignete Lösung der Differentialgleichung ausgewählt und mit dieser Lösung die Kerntemperatur des Garguts 1 berechnet. Welche der Temperatursensoren 6a, 6b, 6c sich innerhalb des Garguts 1 befinden, kann zum Beispiel einfach dadurch bestimmt werden, dass bei einem Anstieg der Temperatur eines der Temperatursensoren 6a, 6b, 6c auf eine Temperatur über 100 °C dieser als außerhalb des Garguts liegend definiert wird. Die bestimmte Kerntemperatur kann dann zur Steuerung des Garprozesses bzw. des Garprogramms verwendet werden.

Wird anhand einer Temperaturdifferenz zwischen den im Gargut 1 liegenden Temperatursensoren 6b, 6c festgestellt, dass das Gargut 1 außen bereits wärmer ist, also das Gargut 1 zu Beginn des Garprozesses bereits erwärmt war, kann diese Information zur Verbesserung bei der Auswahl und Berechnung der Lösung oder der Näherungslösung der Differentialgleichung verwendet werden, z. B. indem ein Korrekturterm für die Zeit addiert wird. Dabei können auch weitere Informationen durch andere Sensoren diese Information bestätigen oder präzisieren. So kann beispielsweise mit Hilfe des Gassensors 48 festgestellt werden, ob sich bereits vor dem Beginn des Garprozesses ein Bratgeruch eingestellt hat, was ein Hinweis auf ein Gargut 1 ist, das bereits vor dem Beladen in einer Pfanne angebraten wurde. Die gleiche Information läßt sich aber auch mit Hilfe des Infrarotsensors 24 aus der Oberflächentemperatur des Garguts 1 gewinnen oder anhand der Färbung der Oberfläche des Garguts 1 mit Hilfe des optischen Sensors 39.

Aber auch ohne die Informationen von weiteren Sensoren 24, 39, 45, 48 ist das erfindungsgemäße Verfahren mit Hilfe von Annahmen und/oder Kundeneingaben durchführbar. Der Kunde wählt über die Eingabeeinrichtung 60 ein Großbratenprogramm aus und gibt auch die Ziel-Kerntemperatur und die gewünschte Bräunung des Garguts 1 ein. Die Recheneinheit 30 lädt aus dem Speicher 33 neben dem ausgewählten Garprogramm auch die typische Form eines Großbratens (z.B. Kugel oder Elypsoid) als Randbedingung und schränkt so die möglichen Lösungen der Differentialgleichung ein. Wird statt dessen ein Garprogramm "Kurzgebratenes" ausgewählt, lädt die Recheneinheit 30 die Randbedingung für einen plattenförmigen oder einer zylinderförmigen Körper. Die Homogenität des Garguts 1 hinsichtlich Wärmeleitung und Wärmekapazität wird wegen der Homogenität von Fleischstücken vorausgesetzt. Des weiteren kann entweder eine für Fleisch typische temperaturunabhängige Wärmeleitfähigkeit aus dem Speicher 33 geladen werden, oder auch die Funktion der Wärmeleitfähigkeit von Fleisch in Abhängigkeit der Temperatur. Die Temperaturverteilung zu Beginn des Garens wird mit Hilfe eines einzigen Temperatursensors 6 im Gargut 1 abgeschätzt oder als konstant im gesamten Gargut vorausgesetzt, die Temperatur an der Oberfläche des Garguts wird als 100 °C angenommen.

Während der Erwärmung des Garguts 1 wird ein Temperaturverlauf über den Temperatursensor 6 gemessen und im Fall eines Großbratens mit Hilfe von Gleichung (7) ausgewertet. Dank der dimensionslosen Parameter, die in Gleichung (7) verwendet werden, ist es nicht notwendig, die Größe des Garguts 1 oder die Wärmeleitfähigkeit des Garguts 1 zu wissen. Die Kerntemperatur des Garguts kann einfach für den Fall $\xi = 0$ ausgerechnet werden. In dem Fall, dass der Kunde zuvor ein Garprogramm für Kurzgebratenes ausgewählt hatte, wird dagegen Gleichung (4) oder Gleichung (5) mit der Bedingung $\xi = 0$ zur Bestimmung der Kerntemperatur verwendet.

Bei einer bestimmten Form des zeitlichen Verlaufs des Temperaturanstiegs im Gargut 1 wäre es also möglich, dass das Gargut 1 eine große Wärmeleitfähigkeit hat, der Temperatursensor 6 tief im Gargut 1 steckt und das Gargut 1 einen großen Durchmesser aufweist. Das Gargut 1 könnte bei der gleichen Form des zeitlichen Verlaufs des Temperaturanstiegs aber auch eine kleine Wärmeleitfähigkeit haben, der Temperatursensor 6 dichter an der Oberfläche des Garguts 1 stecken und das Gargut 1 einen kleinen Durchmesser haben. Die Kerntemperatur am Ort $\xi$ gleich Null wäre in beiden Fällen jedoch gleich, wie sich auch unmittelbar aus Gleichung (7) ergibt, so dass die Kerntemperatur auch bei nicht bekannter Wärmeleitfähigkeit des Garguts bestimmbar ist.

Die in der voranstehenden Beschreibung, den Zeichnungen sowie den Ansprüchen offenbarten Merkmale der Erfindung können sowohl einzeln als auch in jeder beliebigen Kombination für die Verwirklichung der Erfindung in ihrer verschiedenen Ausführungsformen wesentlich sein.

**Bezugszeichenliste**

1        Gargut

| 3 | Temperatursensorspieß |
| 6, 6a, 6b, 6c | Temperatursensoren |
| 9 | Gargerät |
| 12 | Garraum |
| 15 | Gargutträger |
| 18 | Lanze des Temperatursensorspießes |
| 21 | Griff |
| 24 | Infrarotsensor |
| 27 | Kabel |
| 30 | Recheneinheit |
| 33 | Speicher |
| 36 | Installationsraum |
| 39 | Optischer Sensor |
| 42 | Optik |
| 45 | Garraumtemperatursensor |
| 48 | Gassensor |
| 51 | Heizung |
| 54 | Dampfgenerator |
| 57 | Lüfterrad |
| 60 | Eingabeeinrichtung |
| 63 | Anzeigeeinrichtung |
| 66 | Türkontaktschalter |
| I, II, III | Isotherme |
| K | Kern |

**Patentansprüche**

1. Verfahren zur Bestimmung der als kälteste Temperatur in einem Gargut definierten Kemtemperatur des Garguts während eines Garprozesses in einem Garraum eines Gargeräts, das mindestens eine Heizeinrichtung, einen in das Gargut zumindest teilweise einführbaren Temperatursensor, eine Recheneinheit und einen Speicher umfasst, wobei während des Garprozesses das Gargut zumindest zeitweise von aussen nach innen erwärmt wird, zumindest eine Temperatur mit Hilfe des Temperatursensors an wenigstens einer Stelle im Inneren des Garguts zu mindestens zwei Zeitpunkten oder kontinuierlich gemessen wird, und zur Bestimmung der Kemtemperatur aus den gemessenen Temperaturen eine Differentialgleichung in Form einer Wärmeleitungsgleichung verwendet wird, wobei eine Lösung, insbesondere Näherungslösung, der Differentialgleichung, die die Wärmediffusion im Inneren des Garguts beschreibt, aus einer Vielzahl zuvor unter Zugriff auf Formeln, insbesondere Näherungsformeln, und/oder empirisch bestimmte Temperaturkurven, insbesondere in Form von Messreihen, für Gargüter definierter Form und Art bestimmter Lösungen, insbesondere Näherungslösungen, der Differentialgleichung anhand der zeitlichen Entwicklung der gemessenen Temperatur und unter der Annahme, dass zumindest eine für eine thermische Eigenschaft des Garguts charakteristische Grösse über das Gargut konstant ist, ausgewählt wird, und wobei die Kemtemperatur des Garguts mit Hilfe der ausgewählten Lösung berechnet wird, **dadurch gekennzeichnet, dass** der Temperaturfühler an einer beliebigen Seite im Gargut platziert sein kann.

2. Verfahren nach Anspruch 1, **dadurch gekennzeichnet, dass** die Lösung der Differentialgleichung aus einer Vielzahl von zuvor bestimmten Lösungen der Differentialgleichung für unterschiedliche Temperaturen der Oberfläche des Garguts, Grössen des Garguts, Gewichte des Garguts, Typen des Garguts, Wärmekapazitäten des Garguts, thermische Diffusivitäten im Gargut, Wärmeleitfähigkeiten des Garguts, spezifische Wärmewerten des Garguts, Wärmeüberträgen vom Garmedium auf das Gargut, Dichten des Garguts, Positionen des Garguts im Garraum, Anzahl an Gargutstücken im Garraum, Vorbehandlungen des Garguts und/oder Oberflächenstrukturen des Garguts ausgewählt wird, wobei vorzugsweise die Form des Garguts und die thermische Diffusivität des Garguts oder die Form des Garguts und die Wärmeleitfähigkeit des Garguts zur Begrenzung der Anzahl der auswählbaren, zuvor bestimmten Lösungen der Differentialgleichung, zumindest näherungsweise, vorgegeben, bestimmt und/oder festgelegt werden, und/oder die Temperatur der Oberfläche des Garguts der Siedetemperatur von Wasser, insbesondere 100° C, gleichgesetzt wird, und/oder von einem homogenen Gargut ausgegangen wird.

3. Verfahren nach Anspruch 1 oder 2, **dadurch gekennzeichnet, dass** bei der Auswahl der Lösung der Differentialgleichung ein mathematischer Fit des zeitlichen Temperaturverlaufs im Inneren des Garguts berücksichtigt wird, und/oder eine instationäre Differentialgleichung in der Art einer Wärmeleitungsgleichung zu Grunde gelegt wird, und/oder die Lösung der Differentialgleichung während des Garprozesses verbessert wird durch Auswertung von Messdaten zumindest eines weiteren Sensors.

4.  Verfahren nach einem der vorangehenden Ansprüche, **dadurch gekennzeichnet, dass** eine Vorgabe zumindest einer ersten Gruppe von zuvor bestimmten Lösungen der Differentialgleichung durch direkte oder indirekte Auswahl über ein Bedienmenü auf einer Bedienoberfläche am Gargerät, einer Fernbedienung des Gargeräts und/oder einem mit dem Gargerät verbundenen Computer erfolgt, und/oder eine Vorgabe zumindest einer zweiten Gruppe von zuvor bestimmten Lösungen der Differentialgleichung durch Einlesen eines Codes, wie in Form eines Strichcodes, oder über Funk, insbesondere über einen RFID-Chip, erfolgt, und/oder eine Vorgabe zumindest einer dritten Gruppe von zuvor bestimmten Lösungen der Differentialgleichung durch ein Programm erfolgt.

5.  Verfahren nach Anspruch 4, **dadurch gekennzeichnet, dass**
    das Programm angezeigt, verändert und/oder gespeichert wird, wobei vorzugsweise während eines Garprozesses das Programm in Abhängigkeit von Messdaten des Temperatursensors und/oder des weiteren Sensors geändert wird.

6.  Verfahren nach einem der vorangehenden Ansprüche, **dadurch gekennzeichnet, dass** die bestimmte Kerntemperatur und/oder die bestimmte, die Wärmediffusion beeinflussende Grösse zur Steuerung oder Regelung des Garprozesses verwendet und/oder auf einer Anzeigeeinrichtung, insbesondere des Gargeräts, angezeigt und/oder, vorzugsweise im Speicher, gespeichert wird bzw. werden.

7.  Verfahren nach einem der vorangehenden Ansprüche, **dadurch gekennzeichnet, dass** zumindest zwei Temperatursensoren im Inneren des Garguts platziert werden, ein Vergleich der aus den Messdaten der Temperatursensoren berechneten Kerntemperaturen durchgeführt wird, und in Abhängigkeit von dem Ergebnis des Vergleichs die Güte der Kerntemperaturbestimmung, Informationen zu dem Gargut und/oder eine vierte Gruppe von zuvor bestimmten Lösungen der Differentialgleichung ermittelt wird bzw. werden, wobei vorzugsweise die Güte der Kerntemperaturbestimmung, die Information zu dem Gargut und/oder die vierte Gruppe der zuvor bestimmten Lösungen der Differentialgleichung, angezeigt und/oder gespeichert wird bzw. werden, und/oder die Auswahl der Lösung der Differentialgleichung und/oder die Berechnung der Kerntemperatur sooft wiederholt wird bzw. werden, bis die Lösung bzw. der berechnete Werte auf einen Endwert konvergiert.

8.  Verfahren nach Anspruch 7, **dadurch gekennzeichnet, dass**
    die zumindest zwei Temperatursensoren im Gargut einen bekannten Abstand voneinander haben, und aus dem Abstand der Temperatursensoren die Wärmediffusion im Gargut bei bekannter Grösse und Form des Garguts, die Position der Temperatursensoren im Gargut und/oder die Grösse des Garguts bei bekannter Form des Garguts und thermischer Diffusivität im Gargut bestimmt wird bzw. werden.

9.  Verfahren nach einem der vorangehenden Ansprüche, **dadurch gekennzeichnet, dass** zumindest drei Temperatursensoren auf einer Geraden innerhalb des Garguts platziert werden können, wobei die Messdaten der Temperatursensoren zur Bestimmung eines Temperaturgradienten im Inneren des Garguts, des zeitlichen Verlaufs des Temperaturgradienten, des Zeitpunkts, bei dem sich ein definierter Temperaturgradient einstellt, und/oder der Kerntemperatur des Garguts berücksichtigt werden.

10.  Verfahren nach einem der vorangehenden Ansprüche, **dadurch gekennzeichnet, dass** die Messdaten jedes Temperatursensors, die Messdaten des weiteren Sensors, die zuvor bestimmten Lösungen der Differentialgleichung, insbesondere die erste, zweite, dritte und/oder vierte Gruppe an zuvor bestimmten Lösungen der Differentialgleichung, und/oder die ausgewählte Lösung der Differentialgleichung gespeichert wird bzw. werden, insbesondere zusammen mit einer Programmbezeichnung.

11.  Verfahren nach einem der vorangehenden Ansprüche, **dadurch gekennzeichnet, dass** als Parameter der Lösung der Differentialgleichung zur Berechnung der Kerntemperatur und/oder der die Wärmediffusion beeinflussenden Grösse normierte, dimensionslose Grössen für die Zeit, den Ort im Gargut und/oder den Wärmeübergang von einem Garmedium auf das Gargut verwendet wird bzw. werden, und/oder ein Fit für den dimensionslosen Ort $\zeta = x/R$ zur Auswertung des Temperaturverlaufs an die Funktionen der zuvor bestimmten Lösungen der Differentialgleichung berechnet und die Lösung ausgewählt wird, bei der die Abweichung des Fits am geringsten ist.

**12.** Verfahren nach einem der vorangehenden Ansprüche, **dadurch gekennzeichnet, dass** als Lösungen der Differentialgleichung empirisch bestimmte Temperaturkurven verwendet werden, die in verschiedenen Tiefen unterschiedlicher Gargüter bei vorgegebenen Formen der Gargüter, insbesondere durch Messreihen vorbestimmt wurden, wobei vorzugsweise die Temperaturkurven als Funktion des Parameters $\zeta/R$ in einem Speicher des Gargeräts hinterlegt wurden.

**13.** Verfahren nach Anspruch 12, **dadurch gekennzeichnet, dass** die Temperaturkurve mit der geringsten Abweichung, insbesondere Standardabweichung, zu den gemessenen Temperaturen ermittelt wird oder die zwei Temperaturkurven mit der geringsten Abweichung, insbesondere Standardabweichung, zu den gemessenen Temperaturen ermittelt werden und zwischen diesen zwei Temperaturkurven eine weitere Temperaturkurve extrapoliert wird.

**14.** Verfahren nach der Anspruch 12 oder 13, **dadurch gekennzeichnet, dass** die Kerntemperatur des Garguts mit der ermittelten Temperaturkurve durch Einsetzen von $\zeta/R=0$ berechnet wird.

**Claims**

**1.** A method for determining the core temperature of cooked food defined as the coldest temperature in the cooked food during a cooking process in a cooking chamber of a cooking appliance, comprising at least one heating device; a temperature sensor at least partly insertable into the cooked food; an arithmetic unit; and a memory, wherein the cooked food is heated at least intermittently from the outside to the inside during the cooking process, at least one temperature is measured by means of the temperature sensor at at least one location inside the cooked food at at least two points in time or continuously, and a differential equation in the form of a heat equation is used for determining the core temperature from the measured temperatures, wherein a solution, in particular approximate solution, of the differential equation, which describes heat diffusion inside the cooked food, is selected from a plurality of solutions of the differential equation, in particular approximate solutions, previously determined for cooked food of a defined shape and type, using formulas, in particular approximate formulas, and/or empirically determined temperature curves, in particular in the form of measurement series, based on the development in time of the measured temperature and assuming that at least one quantity characteristic of a thermal property of the cooked food is constant over the cooked food, and wherein the core temperature of the cooked food is calculated by means of the selected solution, **characterized in that** the temperature probe can be placed at any location in the cooked food.

**2.** The method according to claim 1, **characterized in that**
the solution of the differential equation is selected from a plurality of previously determined solutions of the differential equation for various temperatures of the surface of the cooked food, sizes of the cooked food, weights of the cooked food, types of the cooked food, heat capacities of the cooked food, thermal diffusivities in the cooked food, thermal conductivities of the cooked food, specific thermal values of the cooked food, heat transfers from the cooking medium to the cooked food, densities of the cooked food, positions of the cooked food in the cooking chamber, number of pieces of cooked food in the cooking chamber, pre-treatments of the cooked food and/or surface structures of the cooked food, wherein preferably the shape of the cooked food and the thermal diffusivity of the cooked food or the shape of the cooked food and the thermal conductivity of the cooked food are at least approximately predefined, determined and/or specified for limiting the number of selectable, previously determined solutions of the differential equation, and/or the temperature of the surface of the cooked good is equated with the boiling temperature of water, in particular 100°C, and/or homogenous cooked food is assumed.

**3.** The method according to claim 1 or 2, **characterized in that**
when selecting the solution of the differential equation, a mathematical fit of the temperature variation in time inside the cooked food is taken into account, and/or a non-stationary differential equation like a heat equation is taken as a basis, and/or the solution of the differential equation is improved during the cooking process by evaluating measuring data of at least one additional sensor.

**4.** The method according to any one of the preceding claims, **characterized in that**
at least one first group of previously determined solutions of the differential equation is predefined by direct or indirect selection by way of an operating menu of a user interface of the cooking device, a remote control of the cooking device and/or a computer connected to the cooking device, and/or at least one second group of previously determined solutions of the differential equation is predefined by reading in a code such as in the form of a bar code or by radio, in particular by way of an RFID chip, and/or at least one third group of previously determined solutions of the differential equation is predefined by a program.

**5.** The method according to claim 4, **characterized in that**
the program is displayed, modified and/or stored, wherein the program is modified preferably during the cooking process depending on the measuring data of the temperature sensor and/or the additional sensor.

**6.** The method according to any one of the preceding claims, **characterized in that**
the determined core temperature and/or the determined quantity influencing heat diffusion is or are used for controlling or regulating the cooking process and/or is or are displayed on a display device, in particular of the cooking device, and/or is or are stored, preferably in the memory.

**7.** The method according to any one of the preceding claims, **characterized in that**
at least two temperature sensors are placed inside the cooked food, a comparison of the core temperatures calculated from the measuring data of the temperature sensors is performed, and the quality of the core temperature determination, information on the cooked food and/or a fourth group of previously determined solutions of the differential equation is or are identified depending on the result of the comparison, wherein preferably the quality of the core temperature determination, information on the cooked food and/or the fourth group of previously determined solutions of the differential equation is or are displayed and/or stored, and/or the selection of the solution of the differential equation and/or the calculation of the core temperature is or are repeated until the solution or the calculated value converge on a final value.

**8.** The method according to claim 7, **characterized in that**
the at least two temperature sensors in the cooked food have a known distance from each other, and the heat diffusion in the cooked food, with the size and shape of the cooked food being known, the position of the temperature sensors in the cooked food, and/or the size of the cooked food, with the shape of the cooked food and thermal diffusivity in the cooked food being known, is or are determined from the distance of the temperature sensors.

**9.** The method according to any one of the preceding claims, **characterized in that**
at least three temperature sensors can be placed on a straight line inside the cooked food, wherein the measuring data of the temperature sensors are taken into account for determining a temperature gradient inside the cooked food, the variation in time of the temperature gradient, the time when a defined temperature gradient is established, and/or the core temperature of the cooked food.

**10.** The method according to any one of the preceding claims, **characterized in that**
the measuring data of each temperature sensor, the measuring data of the additional sensor, the previously determined solutions of the differential equation, in particular the first, second, third and/or fourth group of previously determined solutions of the differential equation, and/or the selected solution of the differential equation is or are stored, in particular together with a program name.

**11.** The method according to any one of the preceding claims, **characterized in that**
normalized, dimensionless quantities for the time, the place in the cooked food and/or the heat transfer from a cooking medium to the cooked food is or are used as parameter(s) of the solution of the differential equation for calculating the core temperature and/or the quantity influencing heat diffusion, and/or a fit for the dimensionless place $\zeta = x/R$ is calculated to the functions of the previously determined solution of the differential equation for evaluating the temperature variation, and the solution for which the deviation of the fit is lowest is selected.

**12.** The method according to any one of the preceding claims, **characterized in that**
empirically determined temperature curves, which were predetermined in different depths of various items of cooked food, with the shapes of the items of cooked food being predefined, in particular by measuring series, are used as solutions of the differential equations, wherein preferably the temperature curves were stored as a function of the parameter $\zeta/R$ in a memory of the cooking device.

**13.** The method according to claim 12, **characterized in that**
the temperature curve having the lowest deviation, in particular standard deviation, from the measured temperatures is identified, or the two temperature curves having the lowest deviation, in particular standard deviation, from the measured temperatures are identified, and an additional temperature curve is extrapolated between these two temperature curves.

**14.** The method according to claim 12 or 13, **characterized in that**
the core temperature of the cooked food curve is calculated by substituting $\zeta/R=0$ into the identified temperature.

**Revendications**

1. Procédé de détermination de la température centrale d'un produit à cuire, défini en tant que température la plus froide dans le produit à cuire, pendant un procédé de cuisson dans un espace de cuisson d'un appareil de cuisson, qui comprend au moins un dispositif de chauffage, un capteur de température pouvant être introduit au moins partiellement dans le produit à cuire, une unité de calcul et une mémoire, où, pendant le procédé de cuisson, le produit à cuire est chauffé au moins temporairement de l'extérieur vers l'intérieur, au moins une température est mesurée au niveau d'au moins un emplacement à l'intérieur du produit à cuire à au moins deux instants ou en continu à l'aide du capteur de température, et une équation différentielle sous la forme d'une équation de propagation de la chaleur est utilisée pour une détermination de la température centrale à partir des températures mesurées, où une solution, en particulier une solution approchée, de l'équation différentielle qui décrit la diffusion de chaleur à l'intérieur du produit à cuire, est sélectionnée parmi une pluralité de solutions, préalablement déterminées pour des produits à cuire de forme et de type définis, en particulier des solutions approchées, de l'équation différentielle, en ayant préalablement recours à des formules, en particulier des formules d'approximation, et/ou à des courbes de température déterminées de manière empirique, en particulier sous forme de séries de mesure, à l'aide de l'évolution temporelle de la température mesurée et en supposant qu'au moins une valeur caractéristique d'une propriété thermique du produit à cuire est constante pour le produit à cuire, et où la température centrale du produit à cuire est calculée à l'aide de la solution sélectionnée, **caractérisé en ce que** le capteur de température peut être placée dans le produit à cuire au niveau d'un emplacement quelconque.

2. Procédé selon la revendication 1, **caractérisé en ce que**,
la solution de l'équation différentielle est sélectionnée parmi une pluralité de solutions préalablement déterminées de l'équation différentielle pour différent(e)s températures de la surface du produit à cuire, tailles du produit à cuire, poids du produit à cuire, types du produit à cuire, chaleurs spécifiques du produit à cuire, diffusivités du produit à cuire, conductibilités thermiques du produit à cuire, degrés thermiques spécifiques du produit à cuire, transmissions thermiques du milieu de cuisson vers le produit à cuire, densités du produit à cuire, positions du produit à cuire dans l'espace de cuisson, nombres de pièces de produit à cuire dans l'espace de cuisson, traitements préalables du produit à cuire et/ou structures superficielles du produit à cuire, où de manière préférée la forme du produit à cuire et la diffusivité thermique du produit à cuire ou la forme du produit à cuire et la conductibilité thermique du produit à cuire sont spécifiés, déterminés et/ou définis en vue d'une limitation du nombre des solutions pouvant être sélectionnées, préalablement déterminées, de l'équation différentielle, au moins de manière approximative, et/ou la température de la surface du produit à cuire est rendue égale à la température d'ébullition de l'eau, en particulier 100°C, et/ou est dégagée par un produit à cuire homogène.

3. Procédé selon la revendication 1 ou 2, **caractérisé en ce que**
lors de la sélection de la solution de l'équation différentielle, un ajustement mathématique de la courbe temporelle de température à l'intérieur du produit à cuire est pris en compte, et/ou une équation différentielle transitoire du type équation de propagation de la chaleur est prise comme base, et/ou la solution de l'équation différentielle est améliorée pendant le procédé de cuisson grâce à une interprétation de données de mesure d'au moins un autre capteur.

4. Procédé selon l'une quelconque des revendications précédentes, **caractérisé en ce que**
une spécification d'au moins un premier groupe de solutions préalablement déterminées de l'équation différentielle a lieu par sélection directe ou indirecte par l'intermédiaire d'un menu de commande proposé sur une surface de commande au niveau de l'appareil de cuisson, sur une commande à distance de l'appareil de cuisson et/ou sur un ordinateur relié à l'appareil de cuisson, et/ou une spécification d'au moins un deuxième groupe de solutions préalablement déterminées de l'équation différentielle a lieu par lecture d'un code, comme sous la forme d'un code-barres, ou par radio, en particulier par l'intermédiaire d'une puce RFID, et/ou une spécification d'au moins un troisième groupe de solutions préalablement déterminées de l'équation différentielle a lieu grâce à un programme.

5. Procédé selon la revendication 4, **caractérisé en ce que**
le programme est indiqué, modifié et/ou mémorisé, où, de manière préférée, le programme est modifié en fonction de données de mesure du capteur de température et/ou de l'autre capteur pendant un procédé de cuisson.

6. Procédé selon l'une quelconque des revendications précédentes, **caractérisé en ce que**
la température centrale déterminée et/ou la valeur déterminée, influençant la diffusion thermique, est ou sont utilisée(s) pour une commande ou une régulation du procédé de cuisson et/ou est ou sont indiquée(s) sur un dispositif d'affichage, en particulier de l'appareil de cuisson, et/ou est ou sont mémorisée(s), de manière préférée dans la mémoire.

**7.** Procédé selon l'une quelconque des revendications précédentes, **caractérisé en ce que**
au moins deux capteurs de température sont placés à l'intérieur du produit à cuire, une comparaison des températures centrales calculées à partir des données de mesure des capteurs de température est mise en oeuvre, et, en fonction du résultat de la comparaison, la qualité de la détermination de température centrale, des informations sur le produit à cuire et/ou un quatrième groupe de solutions préalablement déterminées de l'équation différentielle est ou sont déterminé(s), où, de manière préférée, la qualité de la détermination de la température centrale, l'information sur le produit à cuire et/ou le quatrième groupe des solutions préalablement déterminées de l'équation différentielle est ou sont indiqué(s) et/ou mémorisé(s), et/ou la sélection de la solution de l'équation différentielle et/ou le calcul de la température centrale est ou sont répété(s) jusqu'à ce que la solution ou les valeurs calculées convergent vers une valeur finale.

**8.** Procédé selon la revendication 7, **caractérisé en ce que**
les au moins deux capteurs de température présentent dans le produit à cuire une distance des uns aux autres connue, et la diffusion thermique dans le produit à cuire pour une taille et une forme connues du produit à cuire, la position des capteurs de température dans le produit à cuire et/ou la taille du produit à cuire pour une forme comme du produit à cuire et une diffusivité thermique dans le produit à cuire connu est ou sont déterminée(s) à partir de la distance entre les capteurs de température.

**9.** Procédé selon l'une quelconque des revendications précédentes,
**caractérisé en ce que**
au moins trois capteurs de température peuvent être placés sur une droite à l'intérieur du produit à cuire, où les données de mesure des capteurs de température sont prises en compte pour une détermination d'un gradient de température à l'intérieur du produit à cuire, de la courbe temporelle du gradient de température, de l'instant auquel s'ajuste un gradient de température défini, et/ou de la température centrale du produit à cuire.

**10.** Procédé selon l'une quelconque des revendications précédentes, **caractérisé en ce que**
les données de mesure de chaque capteur de température, les données de mesure de l'autre capteur, les solutions préalablement déterminées de l'équation différentielle, en particulier les premier, deuxième, troisième et/ou quatrième groupes de solutions préalablement déterminées de l'équation différentielle, et/ou la solution sélectionnée de l'équation différentielle est ou sont mémorisée(s), en particulier en commun avec une désignation de programme.

**11.** Procédé selon l'une quelconque des revendications précédentes, **caractérisé en ce que**
des valeurs normalisées, non dimensionnelles, pour le temps, l'endroit dans le produit à cuire et/ou le transfert thermique d'un milieu de cuisson vers le produit à cuire sont utilisée(s) en tant que paramètres de la solution de l'équation différentielle en vue d'un calcul de la température centrale et/ou de la valeur influençant la diffusion thermique, et/ou un ajustement pour l'endroit non dimensionnel $\zeta = x/R$ est calculé en vue d'une interprétation de la courbe de température au niveau des fonctions des solutions préalablement déterminées de l'équation différentielle et la solution pour laquelle l'écart à l'ajustement est le plus faible est sélectionnée.

**12.** Procédé selon l'une quelconque des revendications précédentes, **caractérisé en ce que**
des courbes de température déterminées de manière empirique, qui ont été prédéterminées à diverses profondeurs de différents produits à cuire pour des formes spécifiées des produits à cuire, en particulier grâce à des séries de mesures, sont utilisées en tant que solutions de l'équation différentielle, où les courbes de température sont enregistrées de manière préférée en tant que fonction du paramètre $\zeta/R$ dans une mémoire de l'appareil de cuisson.

**13.** Procédé selon la revendication 12, **caractérisé en ce que**
la courbe de température présentant l'écart le plus faible, en particulier un écart standard, par rapport aux températures mesurées est déterminée ou les deux courbes de température présentant l'écart le plus faible, en particulier un écart standard, par rapport aux températures mesurées sont déterminées et une autre courbe de température est extrapolée entre ces deux courbes de température.

**14.** Procédé selon la revendication 12 ou 13, **caractérisé en ce que**
la température centrale du produit à cuire est calculée avec la courbe de température déterminée en utilisant $\zeta/R = 0$.

Figur 1

Figur 2

Figur 3

Figur 4

Figur 5

Figur 6

Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0687866 A1
- WO 9848679 A
- EP 0601137 B1
- DE 19945021 A1
- DE 10061821 A1
- DE 19609116 A1
- WO 2004062372 A3
- WO 2006069563 A1

**In der Beschreibung aufgeführte Nicht-Patentliteratur**

- **THOMAS ROßNER.** *Automatisierung des Garprozesses von Fleisch,* 1987, 55-60
- Wärmeübertragung. **NORBERT ELSNER et al.** Grundlagen der technischen Thermodynamik. Akademieverlag GmbH, 1993, vol. 2, 83-94
- **GÜNTHER MAIER ; ERICH SCHIFFNER.** technische Thermodynamik. 294-302